# EUROPEAN PATENT APPLICATION

(11) **EP 2 413 508 A1**
(43) Date of publication of application: **01.02.2012**
(21) Application number: 10756153.2
(22) Date of filing: 25.03.2010
(51) Int. Cl.: H04B 1/16, H04N 5/44, H04N 7/173

(54) **BROADCASTING RECEIVER, BROADCASTING RECEIVER CONTROL METHOD, BROADCAST STATION IDENTIFYING METHOD, BROADCASTING RECEIVER CONTROL PROGRAM, AND BROADCAST STATION IDENTIFYING PROGRAM**

(30) Priority: 27.03.2009 JP 2009080455; 29.09.2009 JP 2009225480
(71) Applicant: JVC KENWOOD Corporation, Yokohama-shi, Kanagawa 221-0022 (JP)
(72) Inventor: HATTORI Hiroyuki, Yokohama-shi Kanagawa 221-0022 (JP); KUGA Koji, Yokohama-shi Kanagawa 221-0022 (JP); SUGA Kunihiro, Yokohama-shi Kanagawa 221-0022 (JP); KINOSHITA Yoshihito, Yokohama-shi Kanagawa 221-0022 (JP)
(74) Representative: Leinweber & Zimmermann
(86) International application number: PCT/JP2010/055189
(87) International publication number: WO 2010/110357

(57) **Abstract**

A selected station is identified from the current position and the reception frequency of that selected station (S54), and if that selected station performs internet broadcasts (S55 YES), the internet broadcast is received (S64) and that program is outputted (S65 to S67), whereas if that station does not perform internet broadcasts (S55 NO), an airwave is received and outputted (S68 to 69). Disclosed are a broadcasting receiver, control method, and program which enable a broadcasting receiver (21), used for airwave broadcasts and IP broadcasts, to be able to effectively output both broadcasts.

## Description

### TECHNICAL FIELD

The present invention relates to a broadcasting receiver for both an airwave broadcast and an IP broadcast, a method of controlling the broadcasting receiver, and a program causing a computer to execute the method.

### BACKGROUND ART

Currently, distribution systems, such as IP broadcasts, for distributing content including broadcast programs via the Internet, such as VOD (Video On Demand), IP (Internet Protocol) retransmission of terrestrial digital television broadcasts and internet radio have become widespread. The internet radio can be listened to on a PC (Personal Computer) connected to the Internet using a Web browser and the like. VOD can be viewed using a receiver, such as a television and a STB (Set-Top Box) connected to the Internet. The IP retransmission of terrestrial digital television broadcasts can be viewed using STB connected to a next generation network (NGN: Next Generation Network) of NTT.

Here, there is a case where, if the broadcast program is distributed by the Internet, the distribution target area becomes a problem. The problem does not occur if content without limitation on the distribution area as with the internet radio is distributed. However, in IP retransmission of the terrestrial digital television broadcast, the broadcast target area is defined by laws and ordinances. Accordingly, distribution out of the broadcast target area approved for the broadcast station is prohibited. Therefore, in the IP retransmission of the terrestrial digital television broadcasts, the distribution area is regulated via a closed network, referred to as NGN, different from the Internet. This prevents the content from being distributed outside the broadcast target area.

Patent Literature 1 discloses a receiver allowing internet distribution content to be viewed with area limitation (paragraphs 0023 and 0025 and FIG. 1 in Patent Literature 1). This receiver acquires current latitude and longitude information of the receiver using GPS (Global Positioning System) (81 in FIG. 6 in Patent Literature 1), checks a country area with a flag, that is, checks a country in which a user contracts with a satellite broadcasting platform distributor, such as Sky Perfect, (82 in FIGS. 5 and 6 in Patent Literature 1), and, if the current position is in an reception contract area, the content is output (84 YES, and 88 in FIG. 6 in Patent Literature 1).

Patent Literature 2 discloses an IP broadcast system (FIGS. 1 and 2 in Patent Literature 2). According to this broadcasting system, information of a user-selected channel and an IP broadcast terminal position are transmitted from an IP broadcast terminal (set-top box) to an IP broadcast server (S23 and S24 in FIG. 4 in Patent Literature 2), it is judged whether the IP broadcast terminal position is included in a viewing area of the selected channel or not with reference to an operation area table (S25 in FIG. 4 and paragraph 0051 in Patent Literature 2), and, if it is judged to be included, data of the selected channel is transmitted from the IP broadcast server to the IP broadcast terminal (paragraph 0051 and S27 to S29 in FIG. 4 in Patent Literature 2). The operation area table stores areas where the IP broadcast terminal can operate, for each channel (paragraph 0047 in Patent Literature 2).

Patent Literature 3 discloses a viewing terminal (portable telephone) capable of receiving content from both a broadcasting network and a mobile communications network (FIG. 1 in Patent Literature 3). If the content quality on a broadcasting network side is reduced, the viewing terminal transmits the ID of the broadcast station of the content to a viewing administration server via the mobile communications network (e.g. S02 and S04 in FIG. 4 in Patent Literature 3). On the other hand, the viewing administration server refers to content-stored information (FIG. 2 in Patent Literature 3), searches for a reproduction telephone number or a reproduction URL concerned, and returns this to the viewing terminal (e.g. S05 and S06 in FIG. 4 in Patent Literature 3). The viewing terminal accesses the returned reproduction telephone number or the reproduction URL, receives content from a simultaneous retransmission server as an access destination, and reproduces the content (e.g. S08 to S10 in FIG. 4 in Patent Literature 3).

Patent Literature 3 further discloses limitation on viewing of the content in the mobile communications network distribution in the viewing terminal based on broadcast station specific information (paragraph 0005 in Patent Literature 3).

### CITATION LIST

### PATENT LITERATURE

Patent Literature 1: Japanese Patent Application Laid-Open No. 2008-182604
Patent Literature 2: Japanese Patent Application Laid-Open No. 2008-288814
Patent Literature 3: Japanese Patent Application Laid-Open No. 2005-136879

### SUMMARY OF INVENTION

### PROBLEMS TO BE SOLVED BY THE INVENTION

When output of internet broadcast content is prohibited, the broadcasting receivers in Patent Literature 1 and 2 output nothing and the convenience is low. If the content quality on the broadcasting network side is low, the broadcasting receiver in Patent Literature 3 switches to the mobile communications network and outputs the content of the mobile communications network. However, since content quality of analog airwaves is typically inferior to the content quality of the internet broadcast, if the airwaves are analog airwaves, a user views the broadcast with low quality with first priority.

The objective of the present invention is to provide a broadcasting receiver, a control method and a program for both an airwave broadcast and an IP broadcast and capable of effectively outputting both broadcasts.

### MEANS FOR SOLVING THE PROBLEMS

In this description, an "IP broadcast" includes any broadcast distributing content via a network (particularly the Internet) using IP (Internet Protocol). At least, "internet broadcast", "IP broadcast" and "IP retransmission" are included.

In order to achieve the objective of the invention, the present invention provides a broadcasting receiver as a first embodiment. A broadcasting receiver according to a first aspect of the present invention is a broadcasting receiver for both an airwave broadcast and an IP broadcast, basically including: a broadcast output unit to output content of the airwave broadcast of a selected station or content of the IP broadcast associated with the airwave broadcast; and an output controller to cause the broadcast output unit to output the content of the IP broadcast of the selected station if the content of the IP broadcast of the selected station can be outputted, and to cause the broadcast output unit to output the content of the airwave broadcast of the selected station if the content of the IP broadcast of the selected station cannot be outputted.

Moreover, a broadcasting receiver according to a second aspect of the present invention is a broadcasting receiver for both an airwave broadcast and an IP broadcast, basically including: a broadcast output unit to output content of the airwave broadcast of a selected station or content of the IP broadcast associated with the airwave broadcast; and an output controller to cause the content output unit to outputting audio of the airwave broadcast and a moving image and a still image of the IP broadcast if the IP broadcast of the selected station can be outputted and the content of the IP broadcast of the selected station does not include the audio but only includes the moving image or the still image.

Further, a broadcasting receiver according to a third aspect of the present invention is a broadcasting receiver, basically including: a current position detector to detect a current position; a frequency detector to detect a frequency of an airwave of a selected station; a server searching unit to search for a distribution server of the IP broadcast associated with the airwave broadcast of the airwave on the basis of the detected current position and frequency; and an access unit for, if finding the distribution server to be searched for, accessing the found distribution server, and supplying the broadcast output unit with the distribution content of the IP broadcast from the selected station.

Moreover, the present invention provides a method of controlling a broadcasting receiver or a broadcast station identifying method as a second embodiment. A method of controlling a broadcasting receiver according to a first aspect of the present invention is basically a method of controlling a broadcasting receiver for both an airwave broadcast and an IP broadcast, basically including: a step of judging whether a selected station can output the IP broadcast or not; and a step of, if the selected station can output the IP broadcast, causing the content of the IP broadcast of the selected station to be outputted, and, if the selected station cannot output the IP broadcast, causing the content of the airwave broadcast of the selected station to be outputted.

Moreover, a method of controlling a broadcasting receiver according to a second aspect of the present invention is a method of controlling a broadcasting receiver for both an airwave broadcast and an IP broadcast, basically including: a step of judging whether the IP broadcast of a selected station can be outputted or not; a step of judging whether or not content of the IP broadcast of the selected station does not include audio but includes only a moving image or a still image; and a step of, if the IP broadcast of the selected station can be outputted and the content of the IP broadcast of the selected station does not include audio but only includes a moving image or a still image, causing the content output unit to output audio of the airwave broadcast and a moving image and a still image of the IP broadcast.

Further, a broadcast station identifying method according to a third aspect of the present invention is a broadcast station identifying method, including: a current position detection step of detecting a current position; a frequency detection step of detecting a frequency of an airwave of a selected station; and a broadcast station identifying step of identifying a broadcast station on the basis of the detected current position and frequency.

The present invention provides a program causing a computer to execute the method as a third embodiment. A program according to a first aspect of the present invention is a broadcasting receiver control program causing a computer to execute the method of controlling the broadcasting receiver.

Moreover, a program according to a second aspect of the present invention is a broadcast station identifying program causing a computer to execute the broadcast station identifying method.

### EFFECT OF THE INVENTION

According to the present invention, in a broadcasting receiver for both an airwave broadcast and an IP broadcast, both the broadcasts can effectively be outputted.

### BRIEF DESCRIPTION OF THE DRAWINGS

[FIG. 1] FIG. 1 is a diagram of a schematic configuration of a broadcasting system.
[FIG. 2] FIG. 2 is a block diagram on a major part of the broadcasting receiver in FIG. 1.
[FIG. 3] FIG. 3 is a flowchart of a broadcast switching method applied to the broadcasting receiver in FIG. 2.
[FIG. 4] FIG. 4 is a sequence diagram of a part of processing of permitting an IP broadcast output in the broadcast switching method in FIG. 3.
[FIG. 5] FIG. 5 a sequence diagram of a part of processing of prohibiting an IP broadcast output in the broadcast switching method in FIG. 3; and is a sequence diagram of the broadcast switching method.
[FIG. 6] FIG. 6 is a diagram of a structure of table information held by the broadcasting receiver in FIG. 2 in itself in order to search for an access destination URL.
[FIG. 7] FIG. 7 is a diagram of the table information in FIG. 6 with specific data included in corresponding fields.
[FIG. 8] FIG. 8 is a flowchart of a broadcast switching method applied to the broadcasting receiver in FIG. 2 and not detecting signal levels of airwaves.
[FIG. 9] FIG. 9 is a diagram of a structure of a broadcasting system in a case of acquiring the URL of an originating server of IP broadcasts from the outside.
[FIG. 10] FIG. 10 is a flowchart of a broadcast switching method applied to a broadcasting receiver in the broadcasting system in FIG. 9.
[FIG. 11] FIG. 11 is a sequence diagram of the broadcast switching method in FIG. 10.
[FIG. 12] FIG. 12 is a flowchart of a broadcast switching method in which an authentication process is omitted from the broadcast switching method in FIG. 3.
[FIG. 13] FIG. 13 is a sequence diagram of the broadcast switching method in FIG. 12.
[FIG. 14] FIG. 14 is a flowchart of a reception level monitor process method executed in the broadcasting receiver in FIG. 2.
[FIG. 15] FIG. 15 is a block diagram of a broadcasting receiver comprehending the broadcasting system in FIG. 1 and the like.
[FIG. 16] FIG. 16 is a flowchart of a broadcasting receiver control method applied to the broadcasting receiver in FIG. 15.
[FIG. 17] FIG. 17 shows a relationship between presence or absence of a radio broadcast delivered by a broadcast station selected by a broadcasting receiver and an IP broadcast and a broadcasting source of a screen image and audio outputted by the broadcasting receiver.
[FIG. 18] FIG. 18 is a flowchart of measures against reception failure.
[FIG. 19] FIG. 19 is a block diagram of the broadcasting receiver.
[FIG. 20] FIG. 20 is a flowchart of a broadcasting receiver control method.

### DESCRIPTION OF EMBODIMENTS

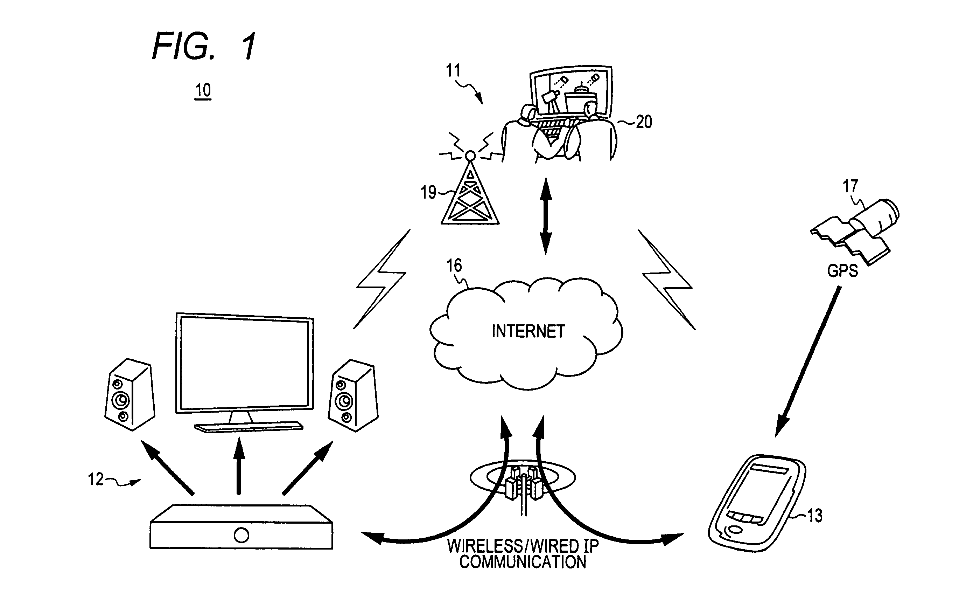

In a following description of embodiments, "IP broadcast" is used for a concept including an internet broadcast and IP retransmission. That is, any broadcast distributing broadcast content from a server to a broadcasting receiver via a network using IP is defined as an "IP broadcast". Embodiments in FIGS. 1 to 14 describe cases where airwaves are analog radio broadcasts. Further, "IP broadcast" in the description of the embodiments in FIGS. 1 to 14 is specifically assumed as "IP retransmission", that is, a broadcast via the Internet substantially simultaneously distributing a program identical to that of a broadcast by radio airwaves.

In FIG. 1, a broadcasting system 10 includes, as major configurational elements, a broadcast station 11, a receiver for both airwaves and IP, such as a stationary broadcasting receiver 12 and a mobile broadcasting receiver 13, and the Internet 16. The mobile broadcasting receiver 13 locates a current position from GPS radio waves from, for instance, a GPS satellite 17. The broadcast station 11 broadcasts a program according to a schedule edited at an editing room 20 from a transmission antenna 19 by means of airwaves (radio waves) while substantially simultaneously transmitting it via the Internet 16.

Among receivers configuring a broadcasting system 10 includes a vehicle-mounted type. In the broadcasting system 10, only one broadcast station 11 is shown. However, an actual broadcasting system 10 includes a plurality of broadcast stations 11. Likewise, for the sake of illustration, only two receivers are shown. However, the actual broadcasting system 10 includes a lot of receivers. In each receiver, a user thereof selects a desired broadcast station 11, and broadcast content of the broadcast station 11 is outputted. The broadcast target area of each broadcast station 11 is defined by the laws and ordinances.

A dual-use receiver, such as the stationary broadcasting receiver 12 and the mobile broadcasting receiver 13, receives airwaves from the transmission antenna 19, and outputs screen images and/or audio of the program from a monitor or a loudspeaker of the own apparatus. The dual-use receiver, if existing in a broadcast target area of each broadcast station 11, receives the program identical to that of the airwaves from the transmission antenna 19, which is distributed via the Internet 16 by means of IP broadcast, and thereby an output thereof is permitted. The stationary broadcasting receiver 12 and the mobile broadcasting receiver 13 are connected to the Internet 16 by means of wireless or wired communication, and receive the IP broadcast program from the Internet 16 via the wireless or wired communication.

Even in a case where the broadcast by means of airwaves from the transmission antenna 19 is an analog broadcast, an IP broadcast via the Internet 16 is delivered by means of digital data. Accordingly, in a case of analog broadcasts, the output quality of a program in the stationary broadcasting receiver 12 and the mobile broadcasting receiver 13 is higher in the IP broadcast than in the airwaves. Accordingly, as described later, the stationary broadcasting receiver 12 and the mobile broadcasting receiver 13 give priority to the output of the IP broadcast in comparison to the output of the airwaves.

In a case of an analog radio broadcast station, an assumed relationship between content (IP broadcast content) delivered by means of the IP broadcast and the content (airwave content) delivered by means of the airwaves from the transmission antenna 19 by the analog radio broadcast station is as follows. (a) The IP broadcast content is identical to the airwave content. (b) In addition to the airwave content, another piece of content, such as screen images, still images and advertisement information, is added to the IP broadcast content. (c) The IP broadcast content is content completely different from the airwave content. The broadcasting system 10 may be any one of (a) to (c).

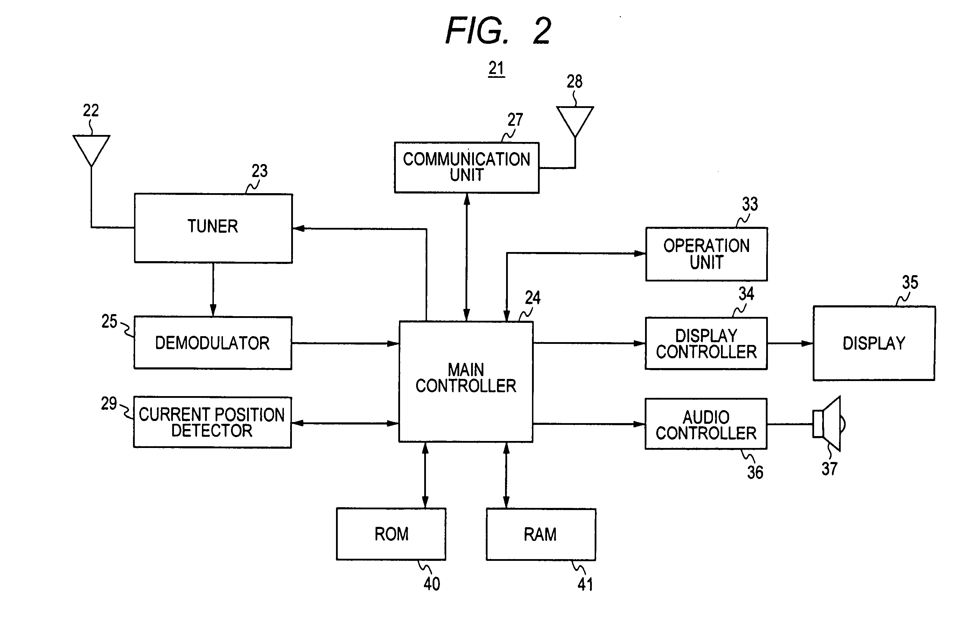

FIG. 2 is a block diagram on a major part of a broadcasting receiver 21. The broadcasting receiver 21 collectively refers to the stationary broadcasting receiver 12 and the mobile broadcasting receiver 13. The broadcasting receivers 21 include: what is installed at a predetermined position in a building, such as a house, as with the stationary broadcasting receiver 12; what is carried by a user, as with the mobile broadcasting receiver 13; and what is mounted on an automobile. The broadcasting receiver 21, particularly if being a portable type or a vehicle-mounted type, frequently enters and exits from the broadcast target area of the broadcast station 11 for viewing, and it is demanded that, only if the broadcasting receiver 21 exists in the broadcast target area of the airwaves associated with the IP broadcast by the broadcast station 11, the IP broadcast of the broadcast station 11 is appropriately controlled so as to be outputted from the broadcasting receiver 21.

The antenna 22 captures radio waves of the terrestrial analog radio broadcast from the transmission antenna 19 (FIG. 1), and the RF signal thereof is transmitted to the tuner 23. The tuner 23 selects an RF signal of a predetermined frequency according to an instruction from the main controller 24, converts it into an IF signal and then transmits it to the demodulator 25. The demodulator 25 demodulates the IF signal and generates an audio signal, and transmits it to the main controller 24.

The communication unit 27 intervenes between the Internet 16 and the main controller 24, transmits and receives data to and from the Internet 16 (FIG. 1) via the wireless antenna 28, and transmits and receives data to and from the main controller 24. The data includes content data of the IP broadcast from the broadcast station 11. The current position detector 29 locates the current position on the basis of GPS radio waves from the GPS satellite 17 (FIG. 1), and transmits current position information to the main controller 24.

An operator 33 is equipped with keys and the like for accepting user operations, and transmits operation information to the main controller 24. A display controller 34 is supplied with a signal pertaining to display information from the main controller 24, and displays the display information on a display 35. An audio controller 36 converts audio data from the main controller 24 into an audio signal to a loudspeaker 37. The loudspeaker 37 converts the audio signal from the audio controller 36 into audio and outputs it.

A ROM 40 is stored with a program and fixed data. The main controller 24 is in a state capable of appropriately reading the recorded data in ROM 40. A RAM 41 is utilized for temporarily storing data while the main controller 24 executes an arithmetic operation.

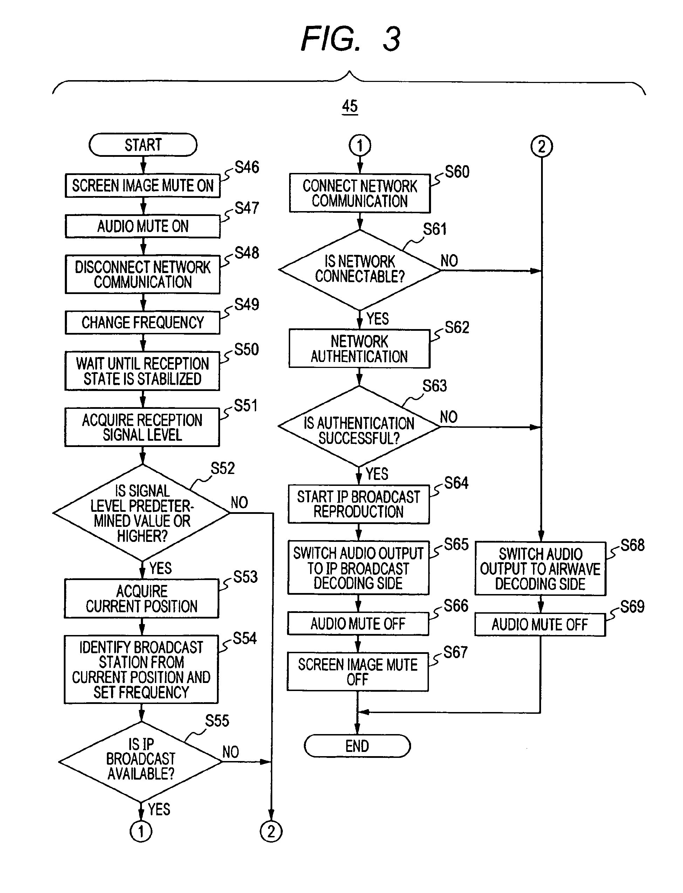

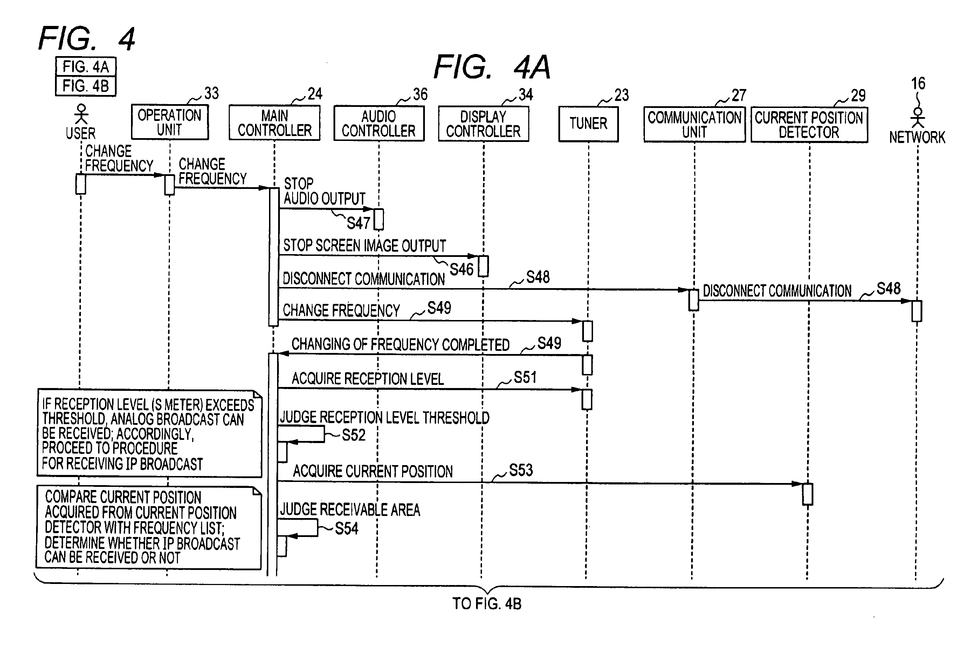

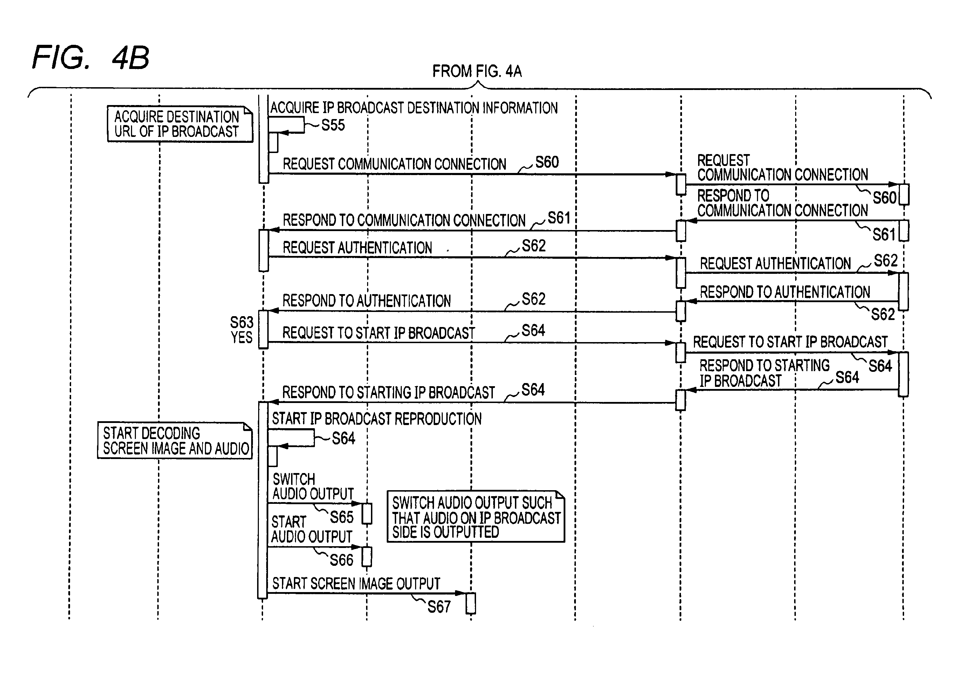

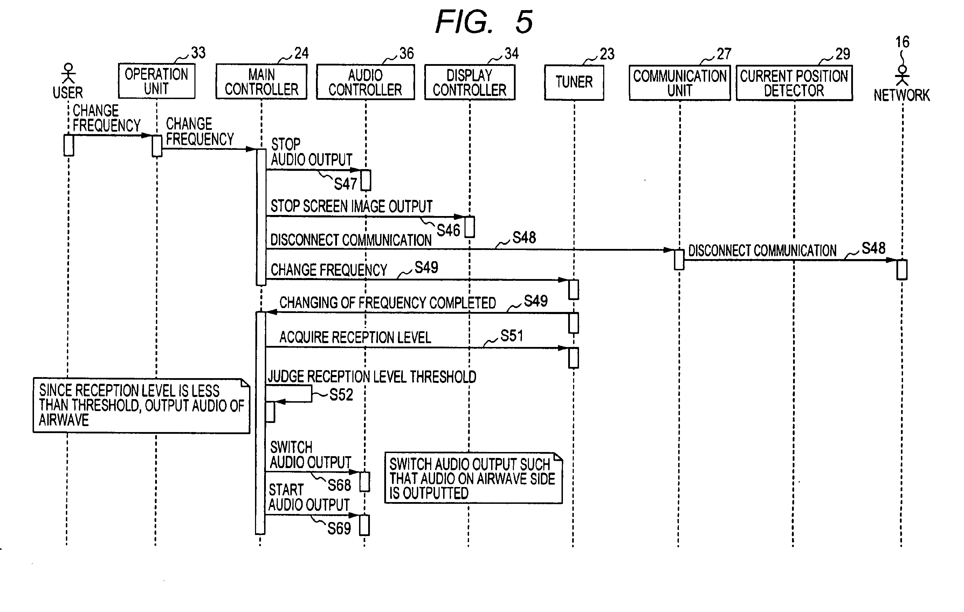

FIG. 3 is a flowchart of a broadcast switching method 45. FIG. 4 is a sequence diagram of a part of processing of permitting an IP broadcast output in the broadcast switching method 45. FIG. 5 is a sequence diagram of a part of processing of prohibiting an IP broadcast output in the broadcast switching method 45. The broadcast switching method 45 is applied to the broadcasting receiver 21, and started to be executed according to the user turning on a power supply of the broadcasting receiver 21 by means of the operator 33 (FIG. 2) and switching the broadcast station to be listened to. The switching of the broadcast station to be listened to by the user in turn switches a selected frequency of the airwaves in the broadcasting receiver 21.

In content of the IP broadcast distributed in association with radio airwaves by the broadcast station 11, a given screen image (e.g., advertisement) may be added to the audio of the radio airwaves. In some cases, the broadcasting receiver 21 may output the IP broadcast before starting executing of the broadcast switching method 45. In the broadcast switching method 45, the output of the screen images and audio of the broadcast received before the switching is stopped (S46 and S47). In this case, if the IP broadcast is received from the broadcast station before switching, since the network connection with an originating server is established, the receiver disconnects network connection with the server. (S48). Subsequently, the selected frequency in the tuner 23 is switched to the frequency of the airwaves of the broadcast station after switching (S49).

Next, in order to confirm whether reception quality of the frequency after switching is sufficiently secured or not, it is waited until the reception signal at the selected frequency in the tuner 23 is stabilized (S50), the level of the reception signal is acquired after the stabilization (S51), and it is confirmed whether the reception signal level is predetermined value or higher or not (S52). If it is the predetermined value or hihger, the processing proceeds to S53; if it is the predetermined value or higher, the processing proceeds to S68.

The indication of the signal level being the predetermined value or higher (S52 "YES") means that the broadcasting receiver 21 exists in the broadcast target area of the broadcast station 11 with respect to the airwaves pertaining to the reception signal. Accordingly, it can be permitted to output content of the IP broadcast associated with the airwaves by the broadcast station 11 from the broadcasting receiver 21. In order for the broadcasting receiver 21 to receive the IP broadcast from the broadcast station 11, the broadcasting receiver 21 is required to acquire the URL (Uniform Resource Locator) of the server, which is the access destination, to access the distribution server via the Internet 16.

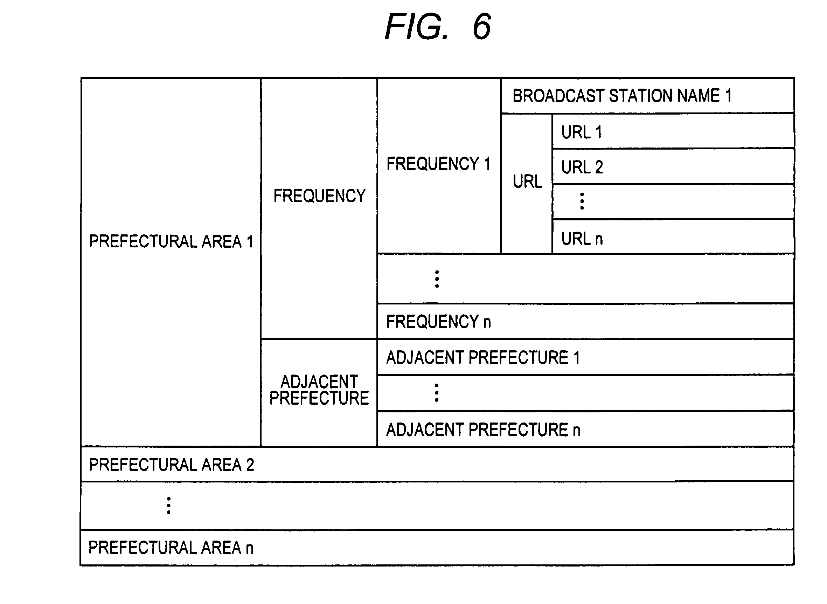

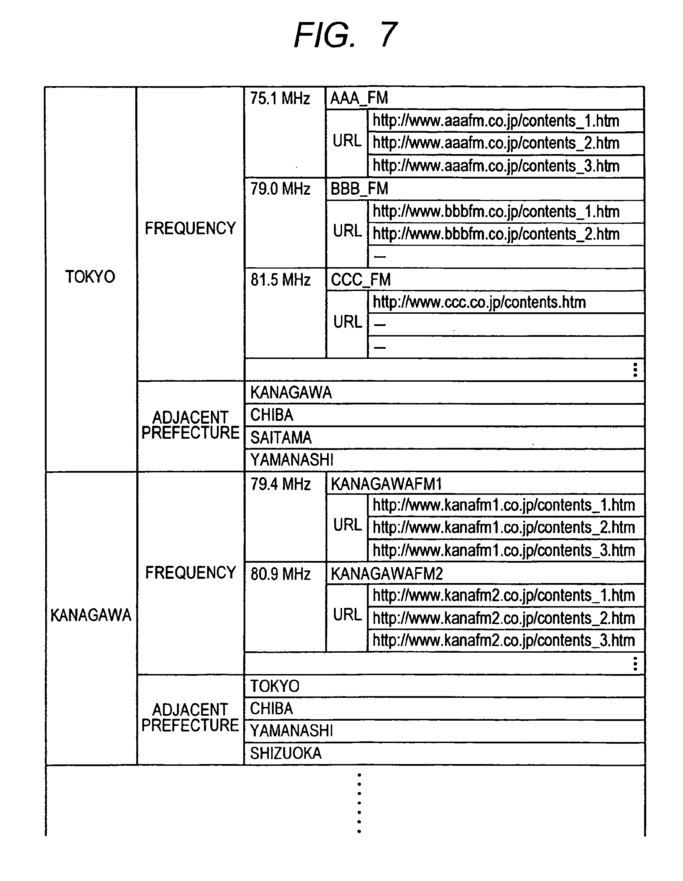

FIG. 6 is a diagram of a structure of table information held by the broadcasting receiver 21 in itself in order to search for an access destination URL. FIG. 7 is a diagram of the table information in FIG. 6 with specific data included in corresponding fields. Since the current position is managed in units of prefectures in the table information, it is required to determine the current position of the broadcasting receiver 21. As described above with reference to FIGS. 1 and 2, the broadcasting receiver 21 identifies the current position on the basis of the GPS radio waves from the GPS satellite 17 (S53). Thus, the latitude and longitude of the current position are acquired, and the prefecture is determined from the latitude and longitude.

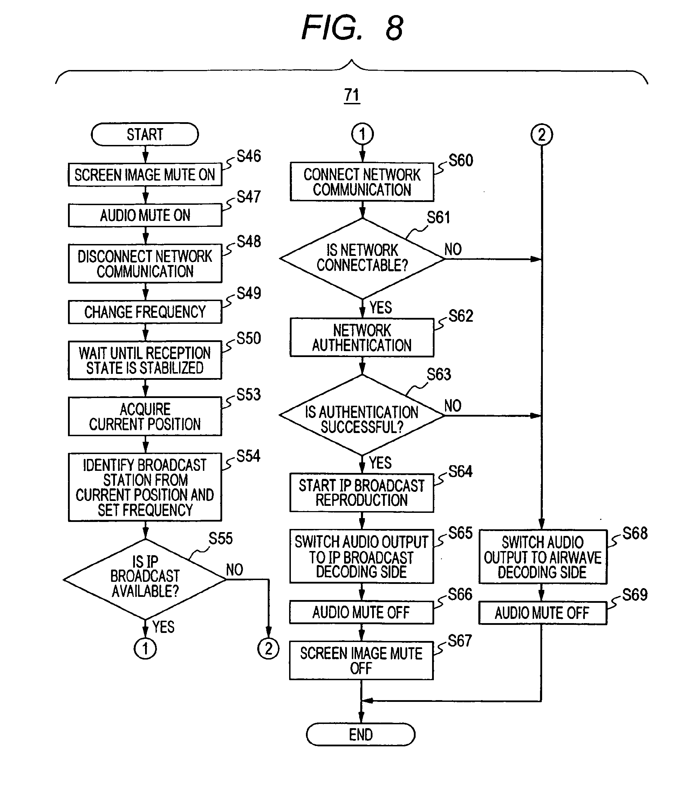

In a method of determining the prefecture from the latitude and longitude, if the receiver has a function corresponding to a car navigation device, use of the function allows the prefecture to be determined from the latitude and longitude. If the receiver does not have such a function, a well-known server having the function capable of determining the prefecture from the latitude and longitude exists in the Internet 16, thereby allowing acquisition of the prefecture by accessing the server to inquire. A specific way of acquiring URL by inquiry will be described later with reference to FIGS. 8 to 11.

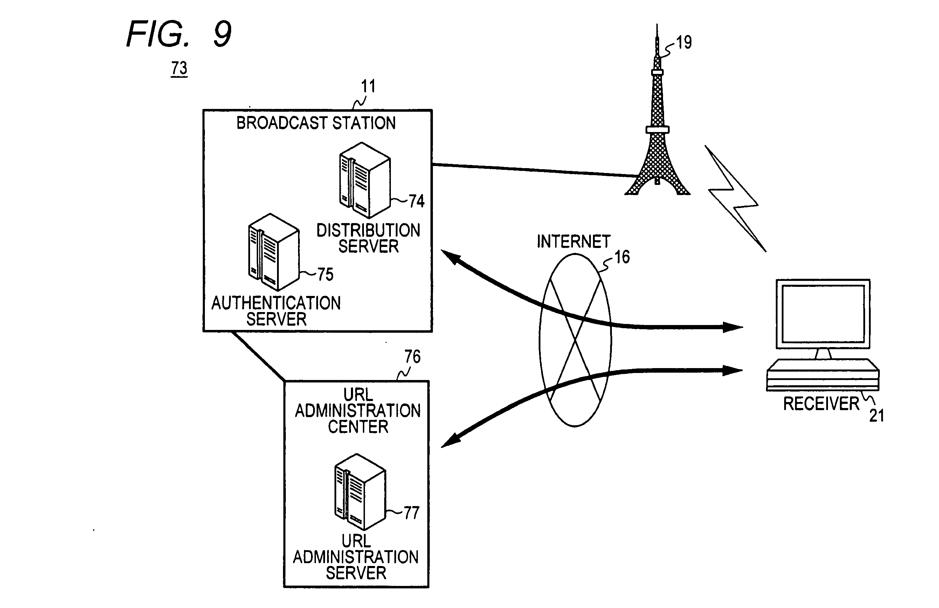

It has been described that the access destination for accessing the distribution server (corresponding to an after-mentioned distribution server 74 in FIG. 9) in the Internet 16 is URL. However, this is not to limit it to URL. Instead, another pieces of means, such as the IP address of a server, may be employed. On the basis of the prefecture acquired by these methods and the current selected frequency, the database (table information in FIGS. 6 and 7) in the broadcasting receiver 21 is searched, the originating broadcast station of the airwaves of the selected frequency is identified (S54), and URL as the access destination is acquired on the basis of the identified broadcast station. The case of table information in FIG. 6 will specifically be described. If the current position is Tokyo and the current selected frequency is 81.5 [MHz], it becomes apparent that the radio broadcast station is CCC_FM and URL is "http://www.ccc.co.jp/contents.htm".

In the database structure in FIGS. 6 and 7, the broadcast target area of the radio broadcast is managed in units of prefectures. It may be managed in units of combination of the prefectures and municipalities. The database structure associates one frequency with one radio broadcast station. There is another case where the radio broadcast station transmits airwaves from a plurality of relay stations. Accordingly, a plurality of frequencies can be associated with one radio broadcast station. In the database structure, one radio broadcast station holds a plurality of URLs. This is because, in a case where one radio broadcast station distributes a plurality of broadcasts, it is considered that access to each URL switches the broadcast and the program to be viewed. If only one broadcast is distributed, it is suffice that only one URL is associated with the broadcast station.

If any URL is not stored in the database at all (if S55 "NO"), since the radio broadcast station does not deliver IP broadcast, the processing proceeds to S68.

If URL is stored in the database (if S55 "YES"), in order for the broadcasting receiver 21 to access the acquired URL, communications is established with the distribution server indicated by the URL (S60). After the communication is established (S61 "YES"), authentication with the distribution server indicated by the URL is performed (S62). The broadcast to be distributed via the Internet is thus accessed on the basis of URL. If it is distributed via the Internet, acquisition of URL allows the broadcast to be accessed using a personal computer from any area. This leads to distribution to any area largely beyond the broadcast target area permitted to the broadcast distributor. Accordingly, it is an objective to impose limitation so as to allow viewing only by a specific apparatus using authentication means, such as user authentication and device authentication.

Returning to FIG. 3, if the authentication is succeeded (S63 "YES"), the IP broadcast can be received, reproduction of the screen image and audio of the received IP broadcast is started (S64), audio output is switched to an IP broadcast decoding side so as to output the reproduced audio (S65), and subsequently mute of the screen images and mute of the audio are canceled (S66 and S67). If the authentication is unsuccessful (S63 "NO"), the processing proceeds to S68.

An operation in a case where reception signal level is less than a predetermined value when the frequency is changed and the reception quality is not sufficiently secured, is described (FIG. 5). If the frequency is changed and the reception signal level is less than the predetermined level (if S52 "NO" in FIG. 3), the broadcast cannot sufficiently be received. Accordingly, it is not possible to determine whether the airwaves are from the broadcast station 11 in the broadcast target area or not. Even if the broadcast station 11 distributes the IP broadcast, the broadcasting receiver 21 does not access the distribution server to receive the distribution of the IP broadcast. Accordingly, in this case, in order to unconditionally listen to the contents from the airwave, the processing proceeds to S68.

In S68, the main controller 24 switches the audio output to an airwave decoding side, that is, switches it to the audio signal pertaining to the demodulated signal from the demodulator 25, and subsequently cancels the audio mute in S69.

As is understood from existence of S46, S47, S66 and S67 in the flowchart and the sequence diagrams of FIGS. 3 to 5, the description is made assuming the case where the IP broadcast content includes both screen images and audio. Irrespective of whether the airwaves associated with the IP broadcast are the radio broadcast or the television broadcast, the content of the IP broadcast may be content only including audio, content of audio + screen images, or content only including screen images.

Additional description is made on the case where "the signal level is less than the predetermined value" in S52 NO. If the predetermined value is set low, the processing proceeds to S68 and S69 according to S52 NO, and the audio output is switched to the airwave decoding side. At this time, there are two states, a state with (a) only noise audible, and a state (b) narrowly audible even though a ratio of noise is high. In a case of the analog broadcast, it is typically (b). Certain users may wish to hear it although reception sensitivity is low. S68 and S69 address such a user. Even in a situation where the signal level is equal to or less than the predetermined value and the internet broadcast is incapable of being viewed, at least the audio from the airwaves is outputted. Certain users may immediately switch the channel since much noise is included. Instead of S68 and S69, a process of notifying the user that the present location is in an area where output of the IP broadcast is prohibited by means of audio output and/or visual display may be performed.

FIG. 8 is a flowchart of another broadcast switching method 71. In the broadcast switching method 71, steps identical to the steps of the broadcast switching method 45 in FIG. 3 are assigned with numerals identical to the numerals assigned to the steps of the broadcast switching method 45.

In the broadcasting system 10 in FIG. 1, if the reception signal level is less than the predetermined value when the frequency is changed and the reception quality is not sufficiently secured, the broadcast distributed by means of the Internet 16 is not received, but the broadcast distributed by means of the airwaves is outputted. On the other hand, in the broadcasting system pertaining to the broadcast switching method 71 in FIG. 8, even in a case incapable of receiving airwaves, if it is possible to identify the current position of the receiver from information acquired from the GPS radio waves from the GPS satellite 17, it can be determined, from the current position, whether the broadcast of the airwaves incapable of being received is in the broadcast target area or not. Accordingly, it is judged whether the broadcast distributed by means of the Internet 16 can be viewed or not, on the basis of the current position.

The difference between the broadcast switching method 71 and the broadcast switching method 45 in FIG. 3 is that, in the broadcast switching method 71, S52 of the broadcast switching method 45 is omitted. In S54 of the broadcast switching method 71, as with S54 of the broadcast switching method 45, from the current position and the frequency of the selected airwaves, the corresponding URL is identified using the table information (database) in FIG. 7. In table information in FIG. 7, URL determined from the current position is URL of the IP broadcast of the broadcast station 11 whose broadcast target area covers the current position. Accordingly, although the broadcast switching method 71 does not detect the signal level of the airwaves of the IP broadcast, output of content of the IP broadcast from the broadcasting receiver 21 can be restricted to a case where the broadcasting receiver exists in the broadcast target area of the airwaves associated with the IP broadcast.

The entire broadcast switching method 71 is described. When a viewer switches the broadcast station to be received, output of the screen images and audio of the broadcast having been received before switching is stopped (S46, S47). In this case, if the received broadcast is the broadcast from the distribution by means of the Internet 16, the connection with the network is established and thus the receiver disconnects network connection with the server. (S48). After such a procedure is executed, the reception frequency is switched to the target frequency (S49). After waiting until stability of the reception status is attained (S50), the latitude and longitude is acquired from GPS (S53), URL according to the current position and the current frequency is acquired as described in the above embodiment (S54), and, if URL is stored, the broadcast distributed by means of the Internet 16 is viewed (S55, S60 to S67).

In the terrestrial analog radio broadcast, there is an area with reception failure because the airwaves do not cover the place where the receiver is installed sufficiently. In the broadcast switching method 71, even in the area with reception failure, if connection to the Internet 16 is available, the broadcast distributed by means of the Internet 16 can be received. Accordingly, measures against the area with reception failure can be taken.

FIG. 9 is a diagram of a structure of a broadcasting system 73 in a case where the broadcasting receiver 21 acquires URL of an originating server of IP broadcasts from the outside. In the broadcasting system 73, duplicated elements of the elements of the broadcasting system 10 in FIG. 1 are assigned with symbols assigned to the elements of the broadcasting system 10. The description thereof is omitted, and only major points are described.

The broadcast station 11 is equipped with a distribution server 74 and an authentication server 75. A URL administration center 76 is equipped with a URL administration server 77. The distribution server 74, the authentication server 75 and the URL administration server 77 are connected to the Internet 16. The broadcasting receiver 21 of the broadcasting system 10 includes the table information in FIG. 7. However, the broadcasting receiver 21 of the broadcasting system 73 does not include this information. In the broadcasting system 73, the URL administration server 77 in the URL administration center 76 is equipped with the table information in FIG. 7. The broadcasting receiver 21 inquires the URL administration server 77 of URL of the broadcast station 11 of the currently selected frequency via the Internet 16, and receives the URL from the URL administration server 77.

In the broadcasting system 73, even if URL of the IP broadcast distribution server 74 in the broadcast station 11 is changed, it is suffice that only data in the URL administration server 77 collectively managing URLs is changed. This allows URL management to be rationalized in comparison with the case of changing the table information in FIG. 7 in the individual broadcasting receivers 21.

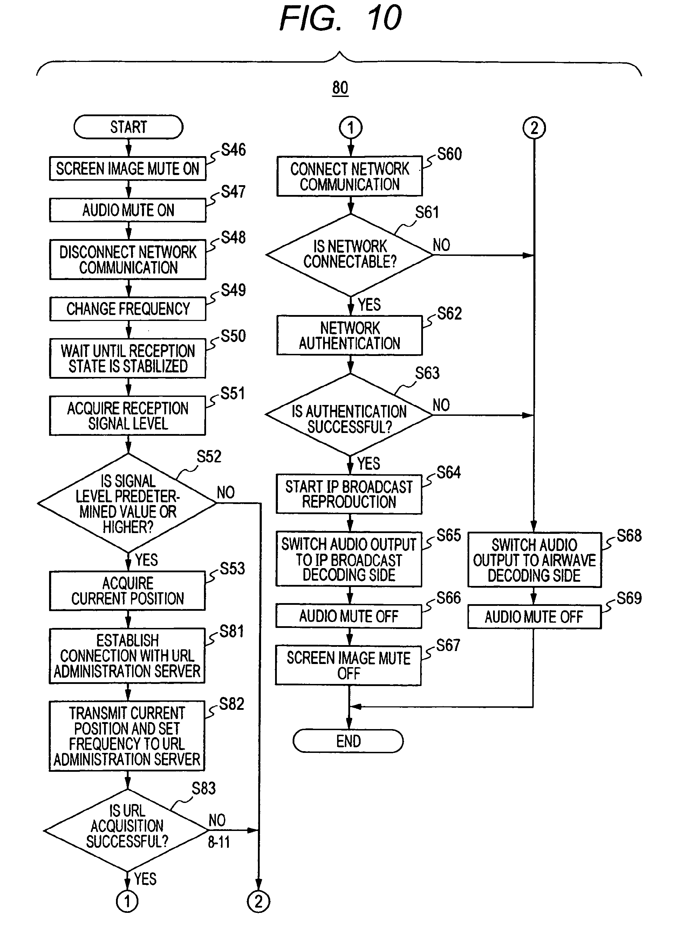

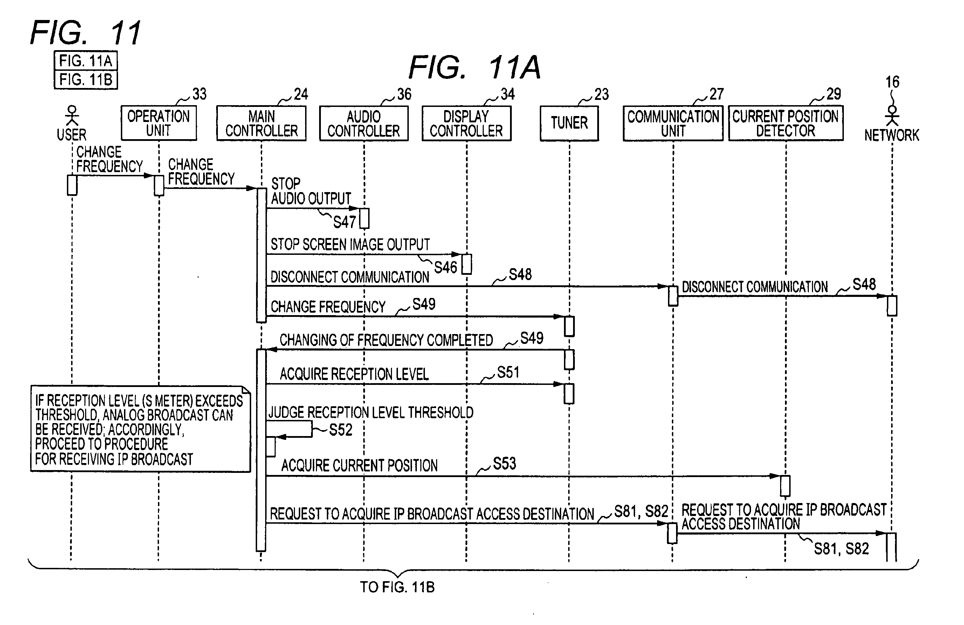

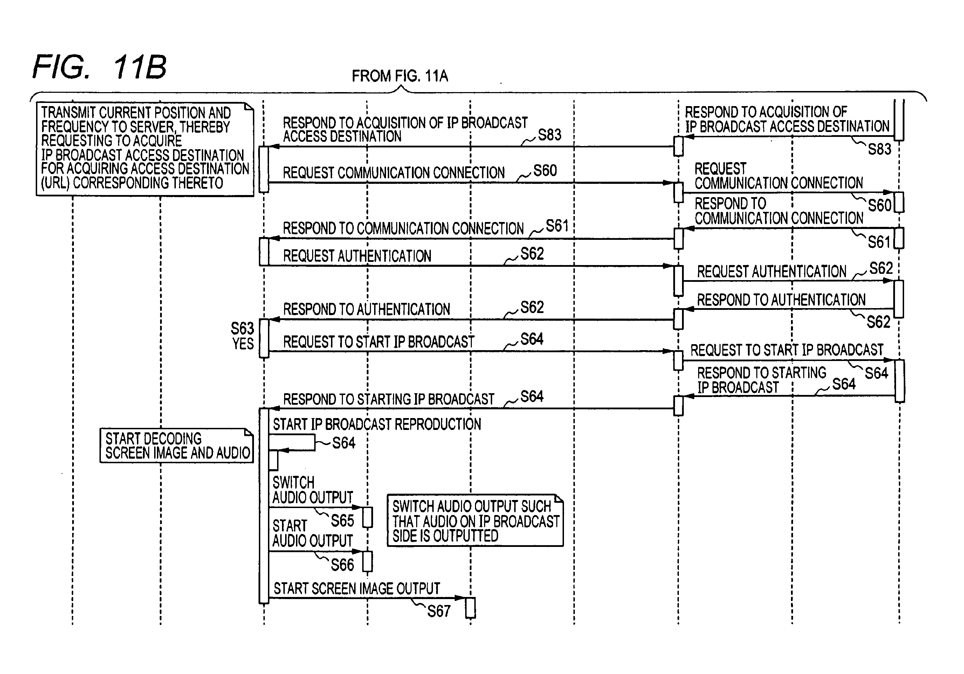

FIG. 10 is a flowchart of a broadcast switching method 80 applied to the broadcasting receiver 21 in the broadcasting system 73 in FIG. 9. FIG. 11 is a sequence diagram of the broadcast switching method 80 in FIG. 10. In the broadcast switching method 80, steps identical to the steps in the broadcast switching method 45 in FIG. 3 are assigned with numerals identical to the numerals assigned to the steps in the broadcast switching method 45.

In the broadcast switching method 80, instead of S54 and S55 in the broadcast switching method 45 in FIG. 3, S81 to S83 are inserted between S53 and S60. In S81, the broadcasting receiver 21 establishes connections with the URL administration server 77 via the Internet 16. In S82, the current position and the set frequency (selected frequency) are transmitted to the URL administration server 77.

The URL administration server 77 searches a database (table information in FIG. 7) held in the own apparatus, for URL associated with the current position and the set frequency received from the broadcasting receiver 21, and returns a search result to the broadcasting receiver 21. If URL concerned exists, the broadcasting receiver 21 can know it from reception information from the search result from the URL administration server 77. In S83, it is judged whether acquisition of URL has succeeded or not. If the judgment is true, the processing proceeds to S60. If it is false, the processing proceeds to S68.

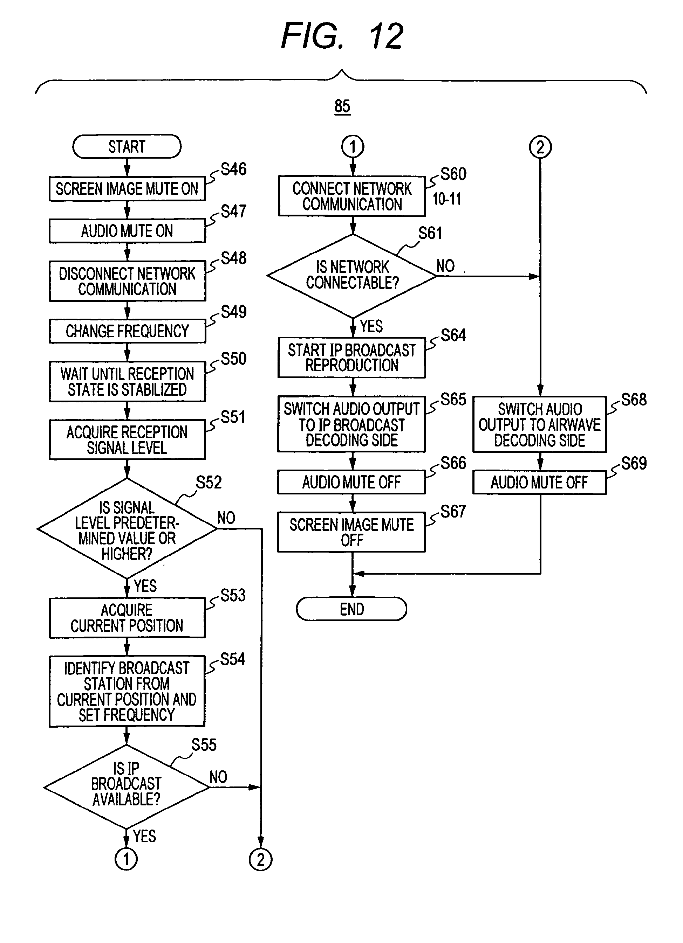

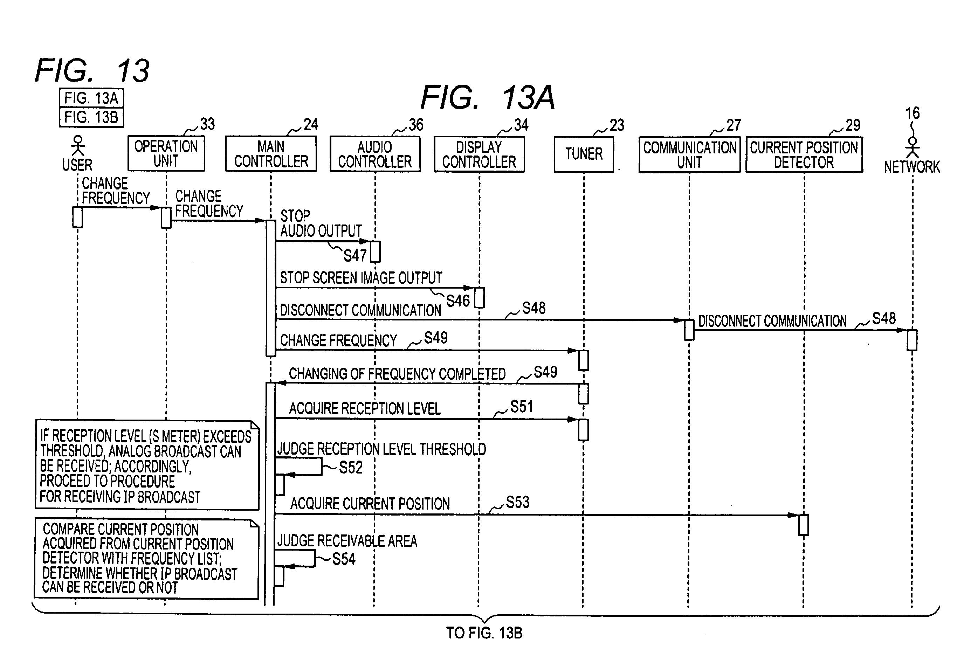

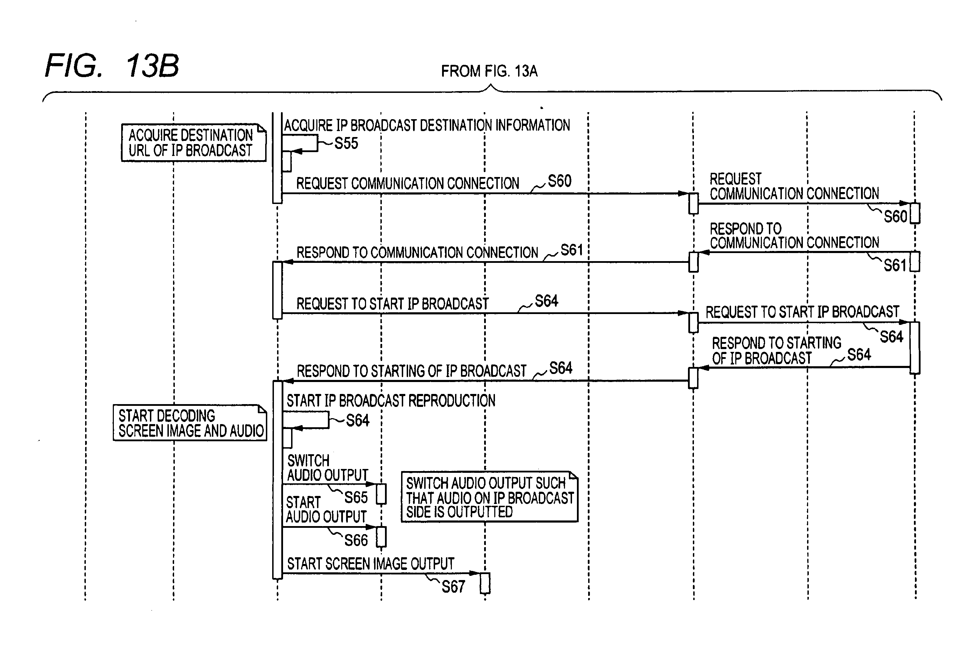

FIG. 12 is a flowchart of a broadcast switching method 85 in which an authentication process is omitted from the broadcast switching method 45 in FIG. 3. FIG. 13 is a sequence diagram of the broadcast switching method 85 in FIG. 12. In the broadcast switching method 85, steps identical to the steps in the broadcast switching method 45 in FIG. 3 are assigned with numerals identical to the numerals assigned to the steps in the broadcast switching method 45. The description thereof is omitted. Only the difference therebetween is described. In the broadcast switching method 85, S62 and S63 in the broadcast switching method 45 in FIG. 3 are omitted.

If the broadcasting receiver 21 holds URL of the distribution server 74 in the own apparatus or acquires it from a specific server, it can be considered that there is little possibility of leakage of URL to the outside. Without leakage to the outside, any apparatus such as PC (personal computer) cannot receive it. Accordingly, there is no need to especially restrict apparatuses capable of receiving. In such a case, there is no need to perform user authentication or device authentication. Further, omission of the authentication procedures allows the screen images and audio to be outputted sooner. Accordingly, when the frequency is switched (the broadcast station to be received is switched), switching time can be reduced, thereby allowing viewers to be provided with them sooner. The broadcast switching method 85 in FIG. 12 contributes to improvement of convenience of the broadcasting receiver 21 under situations without leakage of URL to the outside.

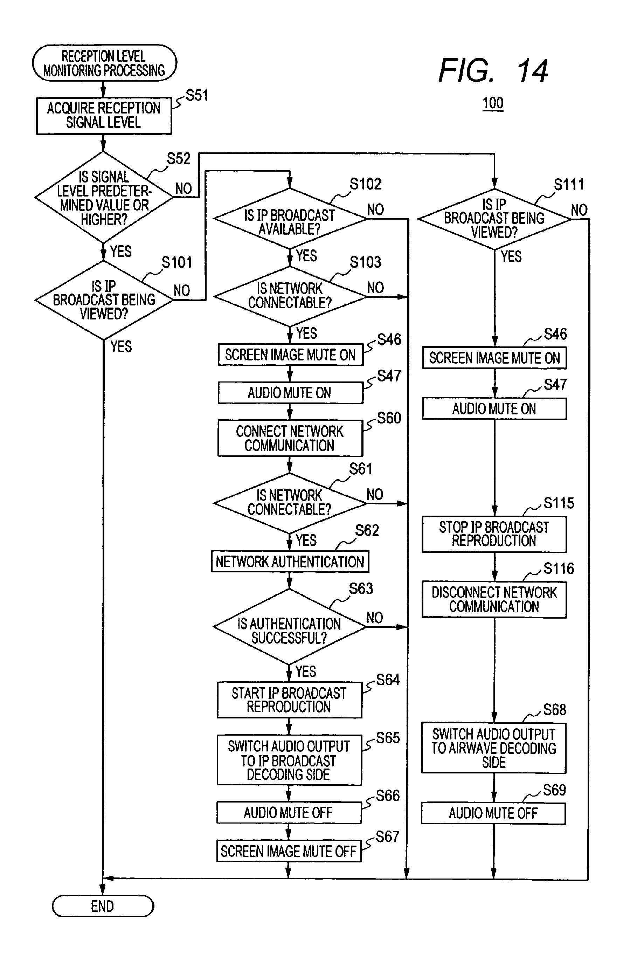

FIG. 14 is a flowchart of a reception level monitor process method 100 executed in the broadcasting receiver 21 in FIG. 2. The reception level monitor process method 100 is activated in predetermined time intervals during operation of the broadcasting receiver 21. The signal level of the airwaves of the selected station in operation in the broadcasting receiver 21 is monitored. If the signal level becomes less than a predetermined value from a predetermined value or higher, or inversely becomes equal to or more than the predetermined value from a value less than the predetermined value, switching of the output from the IP broadcast to the airwave or inverse output switching is performed. In the reception level monitor process method 100, steps identical to the steps of the broadcast switching method 45 in FIG. 3 are assigned with numerals identical to the numerals assigned to the steps in the broadcast switching method 45. The description thereof is omitted, and only the difference is described.

If the judgment in S52 is true, that is, if the broadcasting receiver 21 enters the broadcast target area of the airwaves associated with the currently outputted IP broadcast, the processing proceeds to S101. If the judgment in S52 is false, that is, if the broadcasting receiver 21 exits from the broadcast target area of the airwaves associated with the currently outputted IP broadcast, the processing proceeds to S111.

In S101, whether the user of the broadcasting receiver 21 is viewing the IP broadcast or not is judged, that is, whether the output of the broadcasting receiver 21 is the IP broadcast or not. If the judgment is true, the reception level monitor process method 100 is finished. If false, the processing proceeds to S102. The processing details of S101 and S102 are identical to those in S55 and S61 in the broadcast switching method 45 in FIG. 3. However, as to the destination based on the judgment, in S101, if the judgment is true, the processing proceeds to S102; if false, the reception level monitor process method 100 is finished. In S102, if the judgment is true, the processing proceeds to S46; if false, the reception level monitor process method 100 is finished. Thus, as soon as the broadcasting receiver 21 enters the broadcast target area of the airwaves associated with the currently outputted IP broadcast, the user can view the IP broadcast.

In S111, as with S101, it is judged whether the user of the broadcasting receiver 21 is viewing the IP broadcast or not, that is, whether the output of the broadcasting receiver 21 is the IP broadcast or not. If the judgment is true, the processing proceeds to S46; if false, the reception level monitor process method 100 is finished. S115 and S116 are inserted between S47 and S68. In S115, reproduction of the IP broadcast is terminated. In S116, the communication with the distribution server of this IP broadcast is disconnected. After S116, S68 and S69 are executed. Thus, if the broadcasting receiver 21 exits from the broadcast target area of the airwaves associated with the currently outputted IP broadcast the content of the airwaves is outputted instead of the IP broadcast from the broadcasting receiver 21.

In the embodiments in FIGS. 1 to 14, the case where the broadcasting receiver 21 outputs the IP broadcast is strictly restricted to a case where the broadcasting receiver 21 exists exactly within the prefecture as the legal broadcast target area of the airwaves associated with the IP broadcast. However, such strictness may be relaxed and the broadcasting receiver 21 may be operated. In the current state, the airwaves spill over from the prefecture as the legal broadcast target area and reach the adjacent prefectural area, where viewing is possible. Under such situations, even in a case where the broadcasting receiver 21 is in the adjacent prefectural area, if it is in an area adjacent to the prefectural boundary, the broadcasting receiver 21 is caused to permit the output of the IP broadcast. In accordance with this, the prefectural area in FIG. 6 is not set to the prefectural area as the legal broadcast target area of the airwaves, but is set to a prefectural area including the adjacent prefectural area or a prefectural area widened beyond the prefectural border sectioning the legal broadcast target area of the airwaves by a prescribed distance.

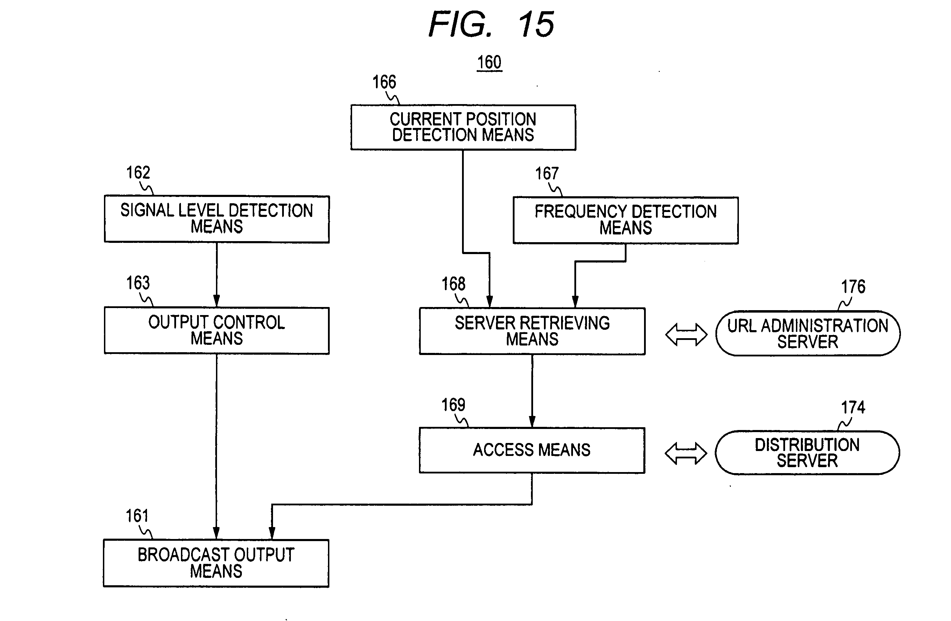

FIG. 15 is a block diagram of a broadcasting receiver 160. The aforementioned broadcasting receiver 21 is an example of the broadcasting receiver 160. The broadcasting receiver 160 is for both the airwave broadcasts and IP broadcasts. As described above, if referred to as "IP broadcast" in this description, the "IP broadcast" includes "internet broadcast", "IP broadcast" and "IP retransmission". The broadcasting receiver 160 includes broadcast output means 161, signal level detection means 162 and output control means 163. The broadcasting receiver 160 may further include current position detection means 166, frequency detection means 167, server retrieving means 168 and access means 169.

The broadcast output means 161 outputs the content of the airwave broadcast of the selected station or the content of the IP broadcast associated with the airwave broadcast. The signal level detection means 162 detects the signal level of the airwaves of the selected station. If the detected signal level is a predetermined value or higher, the output control means 163 permits output of the content of the IP broadcast of the selected station from the broadcast output means 161; if it is less than the predetermined value, it is prohibited.

The airwave broadcasts and IP broadcasts are not limited to the radio broadcast. It may be a television broadcast. Typically, the selected station is an analog broadcast station, specifically an analog radio broadcast station (AM or FM radio broadcast station). However, the selected station may be a digital broadcast station. Since the analog airwave does not include ID of the broadcast station, it is difficult to determine the broadcast station from the airwave itself.

The airwave broadcast of the selected station and the IP broadcast associated with the airwave broadcast typically broadcast the identical content substantially simultaneously. However, the content of the airwave broadcast of the selected station and the content of the IP broadcast associated with the airwave broadcast are not limited to the identical content. If the selected station is an analog radio broadcast station, while the content of the airwave broadcast only includes audio, the audio and screen image information related to the audio can be added to the content of the IP broadcast. The selected station restricts the area where the output of the content of the IP broadcast is permitted to the broadcast target area of the airwave broadcast. However, the IP broadcast may adopt content for distribution completely different from the content of the airwave broadcast.

The broadcasting receiver 160 judges whether output of the IP broadcast is permitted or prohibited when the own apparatus exists in the broadcast target area or not on the basis of the signal level of the airwaves of the airwave broadcast associated with the IP broadcast. Accordingly, it can perform control without holding information of whether each point is in the broadcast target area of the airwave broadcast associated with the IP broadcast or not. As a result, if the broadcasting receiver 160 moves into an area on which the information is not held, or if the broadcast target area is changed but the information has not updated yet, it can appropriately control permission and prohibition of output of the content of the IP broadcast.

When "broadcast target area" is illustrated to the broadcasting receiver 160, the broadcast target area is not limited to the prefecture defined as the legal broadcast target area with respect to the airwaves. In the current state, the airwaves spill over from the prefecture defined as the legal broadcast target area with respect to it and reach the adjacent prefectures and allow viewing thereat, more specifically in an area around the boundary with broadcast target area in the adjacent prefecture. Accordingly, it may be demanded to allow output of the IP broadcast in such an area to be secured.

If the broadcasting receiver 160 is a type to be installed in a predetermined position in a building, the current position of the broadcasting receiver 160 is substantially fixed. Accordingly, in a case where the broadcasting receiver 160 moves beyond the broadcast target area, which is a special case such as relocation, an advantageous effect on output of content in a case of movement to an area without the broadcast target area information of the broadcast station is not sufficiently exerted. However, in a case where the broadcast target area is changed but the information is not updated, a sufficient advantageous effect can be exerted.

Preferably, if the detected signal level is a predetermined value or higher and the selected station delivers the IP broadcast, the output control means 163 causes the broadcast output means 161 to output the content of the IP broadcast of the selected station. More specifically, if the selected station is an analog broadcast station, the content distributed as the IP broadcast is higher in reception quality than the content of the airwaves. Accordingly, output of the content of the IP broadcast of the selected station allows a viewer to view content with higher quality (in the broadcasting receiver 160, "viewing" includes a case only with "listening").

Preferably, if the detected signal level is less than a predetermined value or if the selected station of the airwaves which is a base of the detected signal level does not deliver the IP broadcast, the output control means 163 causes the broadcast output means 161 to output the content of the airwave broadcast of the selected station. Thus, the user can view the content of the airwaves, which are desired airwaves, even though the signal level is low and the output quality is low. Note that, if the detected signal level is less than the predetermined value, the output control means 163 may completely terminate the output from the broadcast output means 161 and output alternative content.

If the broadcasting receiver 160 is not a type installed in a place in a house but a vehicle-mounted type or a portable type, the current position of the broadcasting receiver 160 is dynamic. The broadcasting receiver 160 may enter and exit from each broadcast target area of the broadcast station even when it operates. Addressing this, if the broadcast output means 161 outputs the content of the IP broadcast of the selected station, when the detected signal level becomes less than a predetermined value, the output control means 163 preferably switches the output of the broadcast output means 161 to the airwave broadcast of the selected station. If the broadcast output means 161 outputs the content of the airwave broadcast of the selected station, when the detected signal level becomes the predetermined value or higher, the output control means 163 switches the output of the broadcast output means 161 to the IP broadcast of the selected station.

The broadcasting receiver 160 moves during its operation and enters and exits from the broadcast target area of each selected station, and a specific example of output switching of the airwave broadcasts and IP broadcasts in broadcasting receiver 160 accompanying this is given as the reception level monitor process method 100 in FIG. 14. If the broadcasting receiver 160 thus outputs the content of IP broadcast of the selected station or the airwave broadcast, output of the IP broadcast limited within the broadcast target area of the selected station can appropriately be performed with respect to entrance and exit into and from the broadcast target area of the selected station due to the movement of the broadcasting receiver 160.

The current position detection means 166 detects the current position. The frequency detection means 167 detects the frequency of the airwaves of the selected station. The server retrieving means 168 searches for a distribution server 174 of the IP broadcast associated with the airwave broadcast of airwaves on the basis of the detected current position and the detected frequency. If the detected signal level is a predetermined value or higher and the distribution server 174 to be searched for exists, the access means 169 accesses the distribution server 174 and supplies the broadcast output means 161 with the distribution content of the IP broadcast from the selected station.

The broadcasting receiver 160 is equipped with the current position detection means 166, the frequency detection means 167, the server retrieving means 168 and the access means 169. This allows smooth access to the distribution server 174 and enables the content distribution to be received there from. Note that detection of the current position by the current position detection means 166 is not limited to that by the GPS radio wave. The transmission and reception frequency of the portable telephone base station at the position may be detected, or the frequencies of the whole broadcasts capable of being received at a predetermined signal level or higher at the position may be detected, and the whole detected frequencies may be verified with frequency information of the whole broadcast stations capable of being received with respect to each area, thereby performing detection on the basis of the verification result.

Even if the broadcasting receiver 160 does not hold URL information of the distribution server 174 of the IP broadcast associated with the airwave broadcast of the airwave frequency in the own apparatus, URL can be known using the external URL administration server 176. In this case, detection of the current position can be omitted. For instance, in Japan, airwaves of the identical frequency are seldom assigned to the broadcast stations different from each other. If any, the positions of the broadcast stations are sufficiently apart from each other. The movement distance of the user of the broadcasting receiver 160 seldom covers the whole country. For instance, it is limited to the Kanto Region or the Kansai Region. Further, if a plurality of airwaves capable of being received at the current position of the broadcasting receiver 160 exists, areas in which all of the frequencies of the airwaves are available are significantly limited. Accordingly, the current position of the broadcasting receiver 160 can be identified from information including only airwave frequencies.

In the broadcasting receiver 160 addressing such situations, the server retrieving means 168 transmits information of the detected frequency to the URL administration server 176 via the Internet, and receives URL information of the distribution server 174 of the IP broadcast associated with the airwave broadcast of the detected frequency from the URL administration server 176. If the detected signal level is a predetermined value or higher and URL of the distribution server is identified, the access means 169 accesses the distribution server 174 on the basis of this URL and supplies the broadcast output means 161 with the distribution content of the IP broadcast from the selected station.

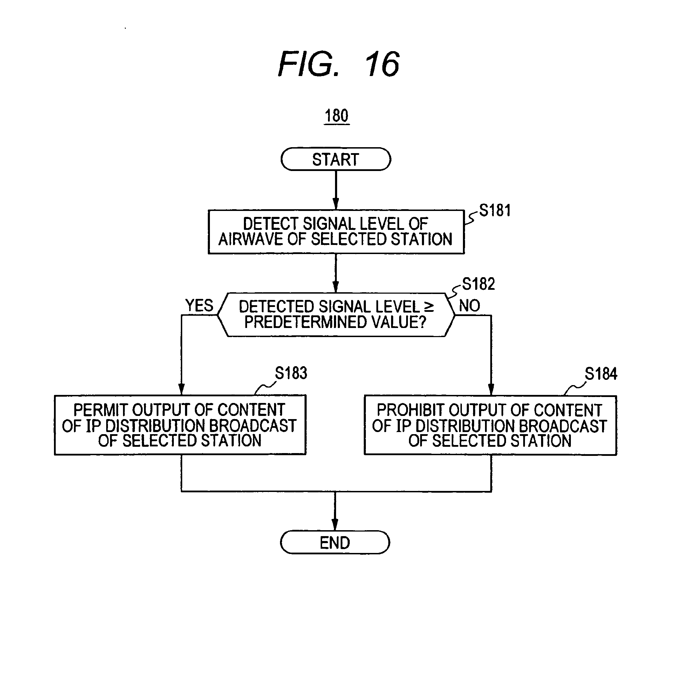

FIG. 16 is a flowchart of a broadcasting receiver control method 180 applied to the broadcasting receiver 160. In S181, the signal level of the airwaves of the selected station is detected. In S182, it is judged whether the detected signal level is a predetermined value or higher or not; if the judgment is true, the processing proceeds to S183; and if it is false, the processing proceeds to S184. In S183, output from the content of the IP broadcast of the selected station is permitted. In S184, output from the content of the IP broadcast of the selected station is prohibited.

The process in S181 corresponds to the function of the signal level detection means 162 of the broadcasting receiver 160. Processes in S182 to S184 correspond to functions of the output control means 163 of the broadcasting receiver 160. The specific modes described above on the functions of the signal level detection means 162 and the output control means 163 are applicable as specific modes of the processes of the corresponding steps.

The steps of the processes associated with the functions of the current position detection means 166, the frequency detection means 167, the server retrieving means 168 and the access means 169 of the broadcasting receiver 160 can be added to the broadcasting receiver control method 180. These added steps are appended after S183.

A program to which the present invention is applied causes a computer to function as each piece of means of the broadcasting receiver 160. Another program to which the present invention is applied causes the computer to execute each step in the broadcasting receiver control method 180.

In this embodiment, it is assumed that, for instance, the radio broadcast station delivers the internet broadcast of the program identical to the program by means of airwaves in substantially real time. On the other hand, in some cases, a user moves around the area while listening to the program of the radio broadcast station, by means of any one of the airwaves and the Internet, using a vehicle-mounted radio or a portable radio for both airwaves and the Internet. In this areal movement, the broadcast target area defined to the radio broadcast station according to the laws and ordinances may be gone out. It is required to appropriately permit and prohibit output of the internet broadcast according to the current position of the dual-use radio.

The above embodiment can provide a broadcasting receiver, a method and a program capable of appropriately control permission and prohibition of the IP broadcast even without use of information of whether the current position is in an area where output of the IP broadcast is permitted or prohibited.

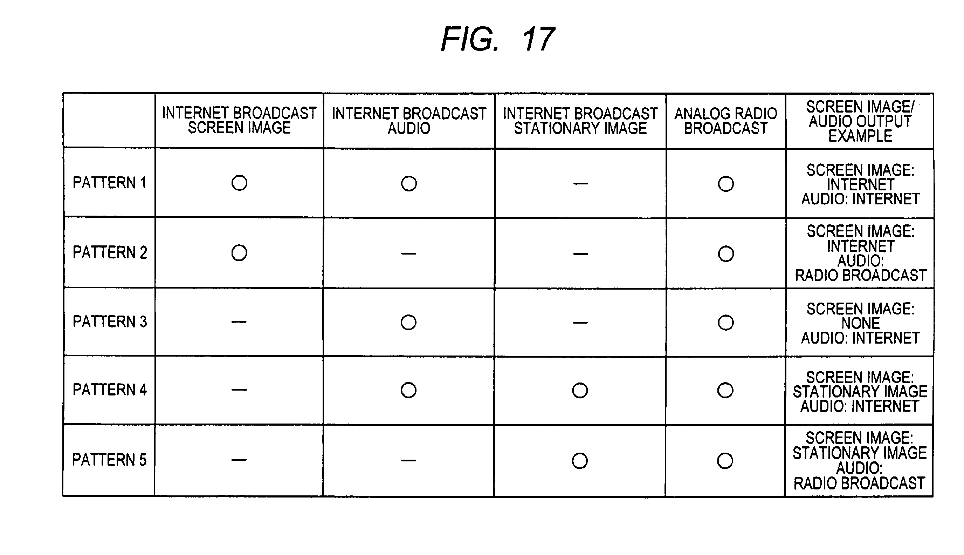

As another embodiment, FIG. 17 shows a relationship between presence or absence of a radio broadcast delivered by the broadcast station 11 selected by the broadcasting receiver 21 and an IP broadcast and a broadcasting source of a screen image and audio outputted by the broadcasting receiver 21. Presence or absence of the radio broadcast and the IP broadcast broadcasted by the broadcast station 11 selected by the broadcasting receiver 21 (this is referred to as "reception pattern") are filled with "o" for presence and "-" for absence. On the other hand, output patterns of the broadcasting source of the screen images and audio outputted from the broadcasting receiver 21 are represented in rightmost columns of the table of FIG. 17 using words and phrases. Patterns 1 to 5 in FIG. 17 are input and output patterns, which are a combination of the reception pattern and the output pattern.

In FIG. 17, the screen images mean moving images, which are discriminated from still images. The screen images in FIGS. 3 to 8 (e.g.: S46 and S64) are used including moving images and still images. In the broadcast station 11, the analog radio broadcast is on air ("o") according to the whole patterns 1 to 5. On the other hand, as to the IP broadcast, the broadcast station 11 delivers content which is a combination of at least one of the screen images, audio and still images.

A default of the output of the broadcasting receiver 21 is preference of the IP broadcast. Therefore, according to an example of screen image/audio output in the rightmost columns of the table of FIG. 17, if the IP broadcast includes audio, the audio output from the broadcasting receiver 21 has preference of the audio of the IP broadcast in comparison with the audio of the analog radio broadcast. If the IP broadcast does not include audio and is a broadcast only with screen images or still images, the screen image output from the broadcasting receiver 21 is the screen image or the still image of the IP broadcast, and the audio output from the broadcasting receiver 21 is the audio of the analog radio broadcast. While in patterns 1, 3 and 4 the output from the broadcasting receiver 21 only includes the content of the IP broadcast, in patterns 2 and 5 screen image content of screen images or still images of the IP broadcast is output in a manner mixed with the audio content of the analog radio broadcast.

It can be changed whether the preference output from the broadcasting receiver 21 is the IP broadcast or the analog radio broadcast, according to a manual operation by a user or product specifications. If the analog radio broadcast is set as the preference output by the user or the product specifications adopt the analog radio broadcast as the preference output, even when the audio of the IP broadcast can be received, the audio from the analog radio broadcast is outputted. Even in a case where the analog radio broadcast is the preference output, if the IP broadcast can be received and the IP broadcast includes the screen image (any of moving images and still images can be adopted), the screen image of the IP broadcast may be outputted. If the user does not wish to output the screen image of the IP broadcast, the broadcasting receiver 21 may be equipped with a setting to which the user can reflect the own taste, so as to output a screen image (screen) preliminarily held by the broadcasting receiver 21.

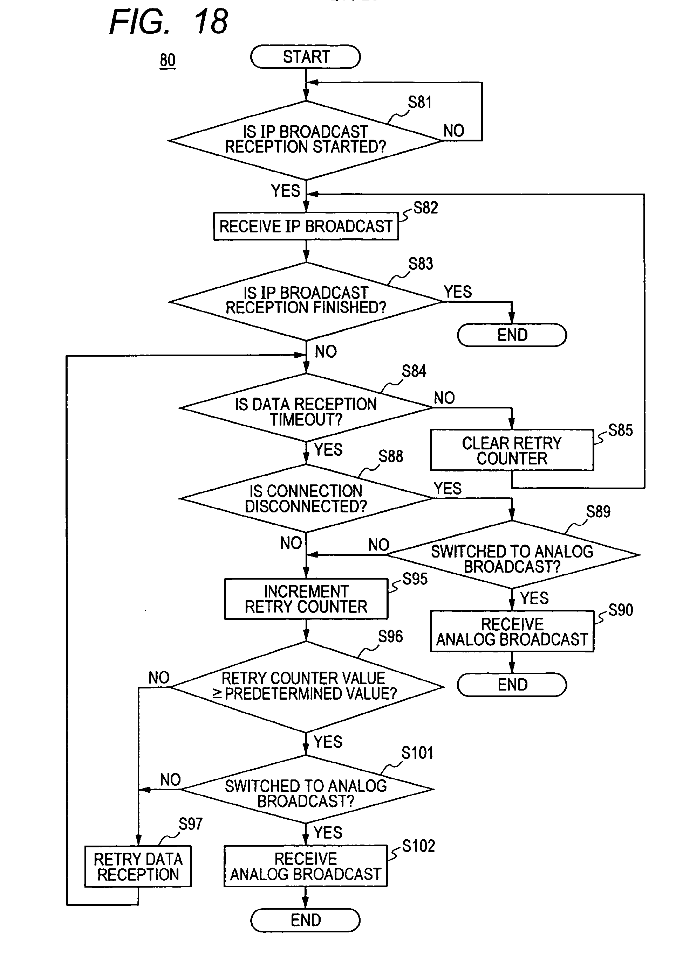

FIG. 18 is a flowchart of the measures against reception failure 80. The measures against reception failure 80 are taken in a period during which the broadcasting receiver 21 outputs any one of the screen image, the still image and the moving image of the IP broadcast according to the broadcast switching method 45 or 71 (FIG. 3 or 8).

In S81, it is judged whether the IP broadcast is started or not, and, as soon as the judgment becomes true, the processing proceeds to S82. In S82, the IP broadcast is received and outputted from the broadcasting receiver 21. Among input and output patterns representing the relationship between reception and output are patterns 1 to 5 in FIG. 17. In the patterns 2 and 5, the output of the IP broadcast is only the screen image or the still image, and audio is not that of an IP broadcast but of the analog radio broadcast.

In S83, it is judged whether reception of the IP broadcast is finished or not; if the judgment is true, the measures against reception failure 80 is finished; if it is false, the processing proceeds to S84. In S84, it is judged whether data reception of the IP broadcast via the Internet 16 becomes timeout or not; if the judgment is true, the processing proceeds to S88; if it is false, the processing proceeds to S85. The broadcasting receiver 21 prepares some data buffers for data reception of the IP broadcast via the Internet 16. Data is received into the data buffer in units of small sizes (e.g., units of packets etc.). After the data is accumulated to be a significant size (e.g., units of frames etc.), the data is stored or subjected to a decoding process according to the situations, and reproduction thereof and the like are performed.

If the data buffer is not filled with the received data in a predetermined time, that is, if the data transfer rate is less than a predetermined value, the judgment of S84 becomes true as timeout. The causes that the data transfer rate is less than a predetermined value include a failure of the IP broadcast server 20, a failure of an access point to the Internet 16 and traffic congestion.

S85 is executed if reception of the IP broadcast is normal. In S85, a retry counter is cleared and the processing proceeds to S82. The retry counter is for counting the number (the number of execution of S95) of repetitions judged as timeout in S84.

In S88, it is judged whether the connection with the IP broadcast server 20 is disconnected or not; if the judgment is true, the processing proceeds to S89; if it is false, the processing proceeds to S95. It can be judged whether the connection is disconnected or not by using, for instance, a PING command. More specifically, the PING command is transmitted from the broadcasting receiver 21 toward the IP broadcast server 20. If a response is not returned from the IP broadcast server 20 to the broadcasting receiver 21 in a predetermined time, it can be judged that the connection with the IP broadcast server 20 has been disconnected. If the connection with the IP broadcast server 20 has been disconnected, the transfer rate is zero, and thus the judgment of disconnection can be replaced with a judgment of whether the amount of transfer in the predetermined time is zero (whether transfer rate = 0) or not.

In S89, it is judged whether to switch the output from the broadcasting receiver 21 from the IP broadcast to the analog broadcast or not; if the judgment is true, the processing proceeds to S90; if it is false, the processing proceeds to S95. As to the judgment of whether to switch it to the analog broadcast or not, more specifically, (a) since the execution is after the connection is disconnected in S88, the judgment of switching may be abolished, and it may compulsorily (unconditionally) be switched to the analog broadcast. Further, (b) if the broadcasting receiver 21 is the portable type or the vehicle-mounted type, there is a case where the broadcasting receiver 21 temporarily enters a tunnel and connection to the Internet 16 is terminated. In this case, it is discriminated whether the current position is in the tunnel or not using GPS and the like, the length of the tunnel and the pass through time are detected on the basis of map data of the navigation device and the like, the judgment in S89 is suspended in the pass through time, it is checked whether the transfer rate is still less than the predetermined value or not after the time has lapsed, and, if it is less than the predetermined value, the judgment in S89 may be regarded to be true.

In S90, the reception at the broadcasting receiver 21 is switched from the IP broadcast to the analog broadcast, and the content of the analog broadcast is outputted from the broadcasting receiver 21. If the output pattern from the broadcasting receiver 21 before execution of S90 is the pattern 2 or 5 in FIG. 17, only the screen image output from the broadcasting receiver 21 is terminated, but, as to the audio output from the broadcasting receiver 21, audio of the analog broadcast is maintained as it is.

In S95, the retry counter is incremented by only one. In S96, it is judged whether the count value of the retry counter is a predetermined value or higher or not; if the judgment is true, the processing proceeds to S101; if it is false, the processing proceeds to S97. In S97, data reception of the IP broadcast is retried, and subsequently the processing returns to S84. On timeout of the data reception in S84, the transfer rate after the retrying data reception has been started is measured again.

In S101, it is judged whether the output from the broadcasting receiver 21 is switched from the IP broadcast to the analog broadcast; if the judgment is true, the processing proceeds to S102; if it is false, the processing proceeds to S97. A specific way of the judgment in S101 is identical to that in the aforementioned S89. In S102, a process identical to that in the aforementioned S90 is executed.

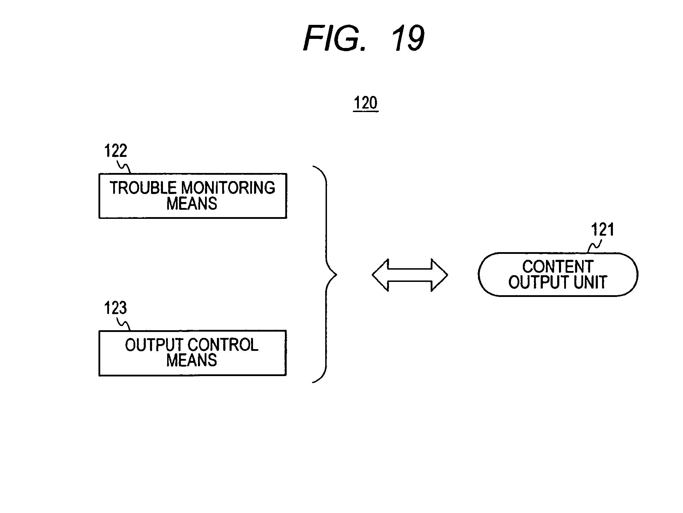

FIG. 19 is a block diagram of the broadcasting receiver 120. A specific example of the broadcasting receiver 120 is the broadcasting receiver 21 (FIG. 2). The broadcasting receiver 120 may be any one of a still type, a portable type and a vehicle-mounted type. The broadcasting receiver 120 includes a content output unit 121, trouble monitoring means 122 and output control means 123.

The content output unit 121 outputs content of the airwave broadcast received from the broadcast station in which the current position is in the broadcast target area of the airwaves or the IP broadcast. The trouble monitoring means 122 monitors reception failure of the IP broadcast during the IP broadcast is outputted from the content output unit 121. If the reception failure of the IP broadcast occurs, the output control means 123 switches the output content from the content output unit 121 from the IP broadcast to the content of the airwave broadcast of the broadcast station broadcasting this IP broadcast.

A specific example of the content output unit 121 is the display 35 and the loudspeaker 37 (FIG. 2). The reception failure of the IP broadcast includes, for instance, a failure of the IP broadcast server 20, a failure of the access point to the Internet 16, and a case of traffic congestion and being underground. The broadcasting receiver 120 receives the IP broadcast via the IP network. The IP broadcast is not limited to the simultaneous broadcast of the airwave broadcast. The content of the IP broadcast may be content irrelevant to the content of the airwave broadcast.

Thus, when reception failure of the IP broadcast occurs during the content of the IP broadcast is outputted from the broadcasting receiver 120, content of the airwave broadcast is outputted instead, thereby allowing prevention of displeasure.

Typically, presence or absence of reception failure of the IP broadcast is judged according to whether the data transfer rate of the IP broadcast is less than a predetermined value or not. Preferably, the trouble monitoring means 122 discriminates whether the current position is a position capable of receiving the airwaves or not, more specifically, whether or not the current position is underground or in a tunnel, detects the length of the underground or the tunnel and the pass through time on the basis of map data in the navigation device, suspends monitoring of the reception status in the pass through time, and, after the pass through time has lapsed, presence or absence of a failure of the reception status of the IP broadcast is judged on the basis of whether the transfer rate is still less than the predetermined value or not. It becomes apparent whether or not the current position is underground or in the tunnel by, for instance, cross-checking the current position against the map data of the navigation device. The length of the tunnel can also be detected from the map data of the navigation device. For instance, in the tunnel, the GPS radio waves cannot be received. Accordingly, the current position is detected on the basis of the acceleration and the speed of the vehicle detected by, for instance, a gyro-sensor and a vehicle speed sensor, and verification of the current position with the map data of the navigation device allows discrimination of whether the automobile mounted with the broadcasting receiver 120 enters the tunnel or exits from the tunnel. The trouble monitoring means 122 terminates monitoring the reception status in the tunnel, and resumes monitoring the reception status as soon as exiting from the tunnel.

The output control means 123 typically causes the content output unit 121 to preferentially output the content of the IP broadcast in comparison with the content of the airwave broadcast of the broadcast station in a period capable of normally outputting the content of the IP broadcast of the broadcast station. If the content of the IP broadcast of the broadcast station does not include audio but only includes screen images or still images, in a period capable of normally outputting the content of the IP broadcast of the broadcast station, the output control means 123 can further cause the content output unit 121 to output the audio of the airwave broadcast and the screen images or the still images of the IP broadcast; when reception failure of the IP broadcast occurs, the content output unit 121 can be caused to stop the output of the screen image or the still image of the IP broadcast while the audio output of the airwave broadcast is maintained.

It is switched to the airwave broadcast owing to the reception failure of the IP broadcast. However, after switching to the airwave broadcast, if the connection of the IP broadcast type broadcast is tried at regular intervals in the background and thus data can stably be connected, output can be switched from the airwave broadcast to the original IP broadcast. In a case of the stationary type, if the user operates output switching from the current airwave broadcast to another airwave broadcast, connection to the IP broadcast associated with the airwave broadcast after switching can be tried. In a case of the vehicle-mounted type or portable type apparatus, (a) if a predetermined time lapses, the reception signal level of the airwave broadcast is monitored again, and, if the current position is in the reception target area, connection of the IP broadcast may be tried, (b) if the reception signal level of the airwave broadcast is reduced, connection of the IP broadcast may be tried, (c) if switching to another airwave broadcast is operated, connection to the IP broadcast associated with the airwave broadcast after switching may be tried.

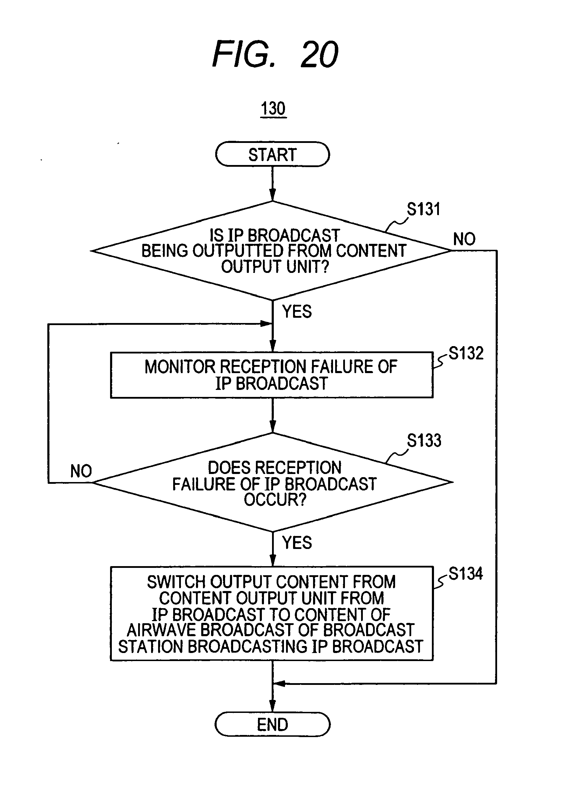

FIG. 20 is a flowchart of a broadcasting receiver control method 130. The broadcasting receiver control method 130 is applied to the broadcasting receiver 120. In S131, it is judged whether the IP broadcast is being outputted from the content output unit 121 or not; if the judgment is true, the processing proceeds to S132; if it is false, the broadcasting receiver control method 130 is finished. In S132, reception failure of the IP broadcast is monitored.

In S133, it is judged whether reception failure of the IP broadcast occurs or not; if the judgment is true, the processing proceeds to S134; if it is false, the processing returns to S132 and monitoring is continued. In S134, output content from the content output unit 121 is switched from that of the IP broadcast to the content of the airwave broadcast of the broadcast station broadcasting the IP broadcast.

The processes in S131 to S133 correspond to the functions of the trouble monitoring means 122 of the broadcasting receiver 120 (FIG. 19). The process in S134 corresponds to the function of the output control means 123 of the broadcasting receiver 120. The specific mode described on each piece of means of the broadcasting receiver 120 is applicable as a specific mode of the corresponding step in the broadcasting receiver control method 130.

A program to which the present invention is applied causes a computer to function as each piece of means of the broadcasting receiver 120. Another program to which the present invention is applied causes the computer to execute each step in the broadcasting receiver control method 130.

The embodiments can provide a broadcasting receiver, a control method and a program capable of effectively addressing when reception failure occurs in the IP broadcast.

This description discloses various scopes and levels of the present inventions. These inventions include, not only the apparatuses and the methods of various technical scopes and specific levels having been described in this description, but also one or more elements exerting independent operations and advantageous effects extracted from each apparatus and each method in a scope of expansion and generalization, one or more elements changed in a scope of expansion and generalization, and each apparatus and each method in which one or more elements have been replaced with each other.

### DESCRIPTION OF REFERENCES

160: broadcasting receiver, 161: broadcast output means, 162: signal level detection means, 163: output control means, 166: current position detection means, 167: frequency detection means, 168: server retrieving means, 169: access means, 174: distribution server, 176:: URL administration server, 180: broadcasting receiver control method

## Claims

1. A broadcasting receiver for both an airwave broadcast and an IP broadcast, comprising:
a broadcast output unit to output content of the airwave broadcast of a selected station or content of the IP broadcast associated with the airwave broadcast; and
an output controller to cause the broadcast output unit to output the content of the IP broadcast of the selected station if the content of the IP broadcast of the selected station can be outputted, and to cause the broadcast output unit to output the content of the airwave broadcast of the selected station if the content of the IP broadcast of the selected station cannot be outputted.

2. The broadcasting receiver according to Claim 1, wherein the output controller judges a case where the selected station does not deliver the IP broadcast as a case where the content of the IP broadcast of the selected station can be outputted.

3. The broadcasting receiver according to Claim 1 or 2, wherein the output controller judges a case where the selected station delivers the IP broadcast and the IP broadcast can be received as a case where the content of the IP broadcast of the selected station can be outputted.

4. The broadcasting receiver according to any one of Claims 1 to 3, further comprising a signal level detector to detect a signal level of an airwave of the selected station,
wherein the output controller judges a case where the selected station delivers the IP broadcast and the detected signal level judged by the signal level detector is a predetermined value or higher as a case where the content of the IP broadcast of the selected station can be outputted.

5. The broadcasting receiver according to any one of Claims 1 to 4, further comprising a signal level detector to detect a signal level of an airwave of the selected station,
wherein the output controller judges a case where the detected signal level judged by the signal level detector is less than a predetermined value as a case where the content of the IP broadcast of the selected station cannot be outputted.

6. The broadcasting receiver according to any one of Claims 1 to 5,
wherein the output controller causes the content output unit to output audio of the airwave broadcast and a moving image or a still image of the IP broadcast, if the content of the IP broadcast of the selected station can be outputted and the content of the IP broadcast of the selected station does not include audio but only includes the moving image or the still image.

7. A broadcasting receiver for both an airwave broadcast and an IP broadcast, comprising:
a broadcast output unit to output content of the airwave broadcast of a selected station or content of the IP broadcast associated with the airwave broadcast; and
an output controller to cause the content output unit to output audio of the airwave broadcast and a moving image or a still image of the IP broadcast if the IP broadcast of the selected station can be outputted and the content of the IP broadcast of the selected station does not include audio but only includes the moving image or the still image.

8. The broadcasting receiver according to any one of Claims 2 to 7, further comprising a communication unit to inquire an administration server of presence or absence of delivery of the IP broadcast of the selected station,
wherein the output controller judges the presence or absence of delivery of the IP broadcast of the selected station according to a response from the administration server.

9. The broadcasting receiver according to any one of Claims 1 to 7, further comprising:
a server searching unit to inquire an administration server storing information identifying a distribution server of the IP broadcast in association with a broadcast station, of information identifying the distribution server of the selected station; and
an access unit for, if the information identifying the distribution server of the selected station is returned from the administration server, accessing the distribution server of the selected station on the basis of the returned information identifying the distribution server of the selected station,
wherein, the output controller, if acquiring the content of the IP broadcast, causes the broadcast output unit to output the distribution content.

10. The broadcasting receiver according to any one of Claims 1 to 7, further comprising:
a frequency detector to detect a frequency of an airwave of the selected station;
a server searching unit to transmit information of the detected frequency to an administration server, and to receive information identifying a distribution server of the IP broadcast associated with the airwave broadcast of the detected frequency from the administration server; and
an access unit to access the distribution server on the basis of the information identifying the distribution server and acquire distribution content of the IP broadcast of the selected station if the information identifying the distribution server becomes apparent,
wherein the output controller, if acquiring the distribution content of the IP broadcast, causes the broadcast output unit to output the distribution content.

11. The broadcasting receiver according to Claim 10, further comprising a current position detector to detect a current position,
wherein the server searching unit transmits the detected current position and the detected frequency to the administration server, and receives information identifying the distribution server of the IP broadcast associated with the airwave broadcast of the detected current position and the detected frequency from the administration server.

12. The broadcasting receiver according to any one of Claims 1 to 7, further comprising:
a current position detector to detect a current position;
a frequency detector to detect a frequency of an airwave of the selected station; and
a server searching unit to search for information identifying the distribution server of the IP broadcast associated with the airwave broadcast of the airwave on the basis of the detected current position and frequency,
wherein, if the distribution server falling under the detected current position and frequency is found, the output controller accesses the distribution server on the basis of the information identifying the distribution server, and the distribution content of the IP broadcast from the selected station is caused to be outputted to the broadcast output unit.

13. The broadcasting receiver according to any one of Claims 2 to 7, further comprising a storage to store information identifying the distribution server distributing distribution content of the IP broadcast of the selected station in association with the selected station,
wherein the output controller discriminates whether the information identifying the distribution server of the selected station is stored in the storage or not, and judges presence or absence of delivery of the IP broadcast of the selected station.

14. The broadcasting receiver according to any one of Claims 4 to 13, wherein, if the broadcast output unit outputs the content of the IP broadcast of the selected station, when the detected signal level becomes less than the predetermined value, the output controller switches an output from the broadcast output unit to that of the airwave broadcast of the selected station.

15. The broadcasting receiver according to any one of Claims 5 to 14, wherein, if the broadcast output unit outputs the content of the airwave broadcast of the selected station, when the detected signal level becomes the predetermined value or higher, the output controller switches an output from the broadcast output unit to that of the IP broadcast of the selected station.

16. The broadcasting receiver according to any one of Claims 1 to 15, further comprising a failure monitor to monitor a reception status of the IP broadcast while the IP broadcast is outputted from the content output unit,
wherein, if a failure occurs in the reception status of the IP broadcast, the output controller switches output content from the content output unit from the IP broadcast to content of the airwave broadcast of the broadcast station broadcasting the IP broadcast.

17. The broadcasting receiver according to Claim 16, wherein presence or absence of the failure of the reception status of the IP broadcast is judged according to whether a data transfer rate of the IP broadcast is less than a value or not.

18. The broadcasting receiver according to Claim 16 or 17, further comprising a storage to store map data,
wherein the failure monitor discriminates whether the current position is a position at which the airwave can be received or not on the basis of the map data, and, if the position is a position incapable of receiving, suspends monitoring the reception status, and, after the position becomes a position capable of receiving, judges presence or absence of the failure of the reception status of the IP broadcast on the basis of whether the transfer rate is still less than the predetermined value or not.

19. The broadcasting receiver according to Claim 6, further comprising a failure monitor to monitor a reception status of the IP broadcast while the IP broadcast is outputted from the content output unit,
wherein, if a failure occurs in the reception status of the IP broadcast, the output controller causes the content output unit to stop an output of the moving image or the still image of the IP broadcast while maintaining an output of audio of the airwave broadcast.

20. The broadcasting receiver according to any one of Claims 1 to 19, wherein the selected station is a broadcast station of an analog radio broadcast.

21. A broadcasting receiver, comprising:
a current position detector to detect a current position;
a frequency detector to detect a frequency of an airwave of a selected station;
a server searching unit to search for a distribution server of the IP broadcast associated with the airwave broadcast of the airwave on the basis of the detected current position and frequency; and
an access unit for, if finding the distribution server to be searched for, accessing the found distribution server, and supplying the broadcast output unit with the distribution content of the IP broadcast from the selected station.

22. A method of controlling a broadcasting receiver for both an airwave broadcast and an IP broadcast, comprising:
a step of judging whether a selected station can output the IP broadcast or not; and
a step of, if the selected station can output the IP broadcast, causing content of the IP broadcast of the selected station to be outputted, and, if the selected station cannot output the IP broadcast, causing content of the airwave broadcast of the selected station to be outputted.

23. A method of controlling a broadcasting receiver for both an airwave broadcast and an IP broadcast, comprising:
a step of judging whether the IP broadcast of a selected station can be outputted or not;
a step of judging whether or not content of the IP broadcast of the selected station does not include audio but includes only a moving image or a still image; and
a step of, if the IP broadcast of the selected station can be outputted and the content of the IP broadcast of the selected station does not include audio but only includes a moving image or a still image, causing the content output unit to output audio of the airwave broadcast and a moving image and a still image of the IP broadcast.

24. A broadcast station identifying method, comprising:
a current position detection step of detecting a current position;
a frequency detection step of detecting a frequency of an airwave of a selected station; and
a broadcast station identifying step of identifying a broadcast station on the basis of the detected current position and frequency.

25. A broadcasting receiver control program, causing a computer to execute the method of controlling a broadcasting receiver according to Claim 22 or 23.

26. A broadcast station identifying program, causing a computer to execute the broadcast station identifying method according to Claim 24.

## Amended claims

### Amended claims under Art. 19.1 PCT

**1.** A broadcasting receiver for both an airwave broadcast and an IP broadcast, comprising:
a broadcast output unit to output content of the airwave broadcast of a selected station or content of the IP broadcast associated with the airwave broadcast; and
an output controller to cause the broadcast output unit to output the content of the IP broadcast of the selected station if the content of the IP broadcast of the selected station can be outputted, and causing the broadcast output unit to output the content of the airwave broadcast of the selected station if the content of the IP broadcast of the selected station cannot be outputted.

**2.** The broadcasting receiver according to Claim 1, wherein the output controller judges a case where the selected station does not deliver the IP broadcast as a case where the content of the IP broadcast of the selected station cannot be outputted..

**3.** The broadcasting receiver according to Claim 1 or 2, wherein the output controller judges a case where the selected station delivers the IP broadcast and the IP broadcast can be received as a case where the content of the IP broadcast of the selected station can be outputted.

**4.** The broadcasting receiver according to any one of Claims 1 to 3, further comprising a signal level detecting unit to detect a signal level of an airwave of the selected station,
wherein the output controller judges a case where the selected station delivers the IP broadcast and the detected signal level judged by the signal level detecting unit is a predetermined value or higher as a case where the content of the IP broadcast of the selected station can be outputted.

**5.** [AMENDED] The broadcasting receiver according to any one of Claims 1 to 3, further comprising a signal level detecting unit to detect a signal level of an airwave of the selected station,
wherein the output controller judges a case where the detected signal level judged by the signal level detecting unit is less than a predetermined value as a case where the content of the IP broadcast of the selected station cannot be outputted.

**6.** The broadcasting receiver according to any one of Claims 1 to 5,
wherein the output controller causes the content output unit to output audio of the airwave broadcast and a moving image or a still image of the IP broadcast, if the content of the IP broadcast of the selected station can be outputted and the content of the IP broadcast of the selected station does not include audio but only includes the moving image or the still image.

**7.** A broadcasting receiver for both an airwave broadcast and an IP broadcast, comprising:
a broadcast output unit to output content of the airwave broadcast of a selected station or content of the IP broadcast associated with the airwave broadcast; and
an output controller to cause the content output unit to output audio of the airwave broadcast and a moving image or a still image of the IP broadcast if the IP broadcast of the selected station can be outputted and the content of the IP broadcast of the selected station does not include audio but only includes the moving image or the still image.

**8.** [AMENDED] The broadcasting receiver according to any one of Claims 2 to 4, further comprising a communication unit to inquire an administration server of presence or absence of delivery of the IP broadcast of the selected station,
wherein the output controller judges the presence or absence of delivery of the IP broadcast of the selected station according to a response from the administration server.

**9.** [AMENDED] The broadcasting receiver according to any one of Claims 1 to 7, further comprising:
a server searching unit to inquire an administration server storing information identifying a distribution server of the IP broadcast in association with a broadcast station, of the information identifying the distribution server of the selected station; and
an access unit for, when the information identifying the distribution server of the selected station is returned from the administration server, accessing the distribution server of the selected station on the basis of the returned information identifying the distribution server of the selected station, and acquiring the content of the IP broadcast of the selected station,
wherein, if the access unit acquires the content of the IP broadcast of the selected station, the output controller causes the broadcast output unit to output the content of the IP broadcast of the selected station.

**10.** [AMENDED] The broadcasting receiver according to any one of Claims 1 to 7, further comprising:
a frequency detection unit to detecte a frequency of an airwave of the selected station;
a server searching unit to transmit information of the detected frequency to an administration server, and to receive information identifying a distribution server of the IP broadcast associated with the airwave broadcast of the detected frequency from the administration server; and
an access unit to access the distribution server on the basis of the information identifying the distribution server and to acquire content of the IP broadcast of the selected station if the information identifying the distribution server becomes apparent,
wherein, if the access unit acquires the content of the IP broadcast of the selected station, the output controller causes the broadcast output unit to output the content of the IP broadcast of the selected station.

**11.** [AMENDED] The broadcasting receiver according to Claim 10, further comprising a current position detector to detect a current position,
wherein the server searching unit transmits the detected current position and the detected frequency to the administration server, and receives information identifying the distribution server of the IP broadcast associated with the airwave broadcast of the detected current position and the detected frequency from the administration server.

**12.** [AMENDED] The broadcasting receiver according to any one of Claims 1 to 7, further comprising:
a current position detector to detect a current position;
a frequency detector to detect a frequency of an airwave of the selected station;
a server searching unit to search for information identifying the distribution server of the IP broadcast associated with the airwave broadcast of the airwave on the basis of the detected current position and frequency; and
an access unit for, if the information identifying the distribution server is found, accessing the distribution server on the basis of the information identifying the distribution server, and acquiring the content of the IP broadcast of the selected station,
wherein, if the access unit acquires the content of the IP broadcast, the output controller causes the broadcast output unit to output the content of the IP broadcast of the selected station.

**13.** [AMENDED] The broadcasting receiver according to Claim 2 or 3, further comprising a storage to store information identifying the distribution server distributing content of the IP broadcast of the selected station in association with the selected station,
wherein the output controller discriminates whether the information identifying the distribution server of the selected station is stored in the storage unit or not, and judges presence or absence of delivery of the IP broadcast of the selected station.

**14.** [AMENDED] The broadcasting receiver according to any one of Claims 1 to 3, further comprising a signal level detecting unit to detect a signal level of an airwave of the selected station,
wherein, if the broadcast output unit outputs the content of the IP broadcast of the selected station, when the detected signal level becomes less than the prescribed value, the output controller switches an output from the broadcast output unit to that of the airwave broadcast of the selected station.

**15.** [AMENDED] The broadcasting receiver according to any one of Claims 1 to 3, further comprising a signal level detecting unit to detect a signal level of an airwave of the selected station,
wherein, if the broadcast output unit outputs the content of the airwave broadcast of the selected station, when the detected signal level becomes at least the prescribed value, the output controller switches an output from the broadcast output unit to that of the IP broadcast of the selected station.

**16.** [AMENDED] The broadcasting receiver according to any one of Claims 1 to 15, further comprising a failure monitor unit to monitor a reception status of the IP broadcast while the IP broadcast is outputted from the content output unit,
wherein, if a failure occurrence in the reception status of the IP broadcast is determined by the failure monitor unit, the output controller switches output content from the content output unit from the IP broadcast to content of the airwave broadcast of the broadcast station broadcasting the IP broadcast.

**17.** [CANCELED]

**18.** [AMENDED] The broadcasting receiver according to Claim 16, further comprising a storage unit to store map data,
wherein the failure monitor unit discriminates whether the current position is a position at which the airwave can be received or not on the basis of the map data, and, if the position is a position incapable of receiving, suspends monitoring the reception status, and, after the position becomes a position capable of receiving, resumes monitoring the reception status.

**19.** [AMENDED] The broadcasting receiver according to Claim 6 or 7, further comprising a failure monitor unit to monitor a reception status of the IP broadcast while the IP broadcast is outputted from the content output unit,
wherein, if a failure occurs in the reception status of the IP broadcast, the output controller causes the content output unit to stop an output of the moving image or the stationary image of the IP broadcast while maintaining an output of audio of the airwave broadcast.

**20.** The broadcasting receiver according to any one of Claims 1 to 19, wherein the selected station is a broadcast station of an analog radio broadcast.

**21.** [CANCELED]

**22.** [AMENDED] A method of controlling a broadcasting receiver for both an airwave broadcast and an IP broadcast, comprising:
a step of judging whether a selected station can output the IP broadcast or not; and
a step of, if the selected station can output the IP broadcast, causing content of the IP broadcast of the selected station to be outputted, and, if the selected station cannot output the IP broadcast, causing content of the airwave broadcast of the selected station to be outputted.

**23.** A method of controlling a broadcasting receiver for both an airwave broadcast and an IP broadcast, comprising:
a step of judging whether the IP broadcast of a selected station can be outputted or not;
a step of judging whether or not content of the IP broadcast of the selected station does not include audio but includes only a moving image or a stationary image; and
a step of, if the IP broadcast of the selected station can be outputted and the content of the IP broadcast of the selected station does not include audio but only includes a moving image or a stationary image, causing the content output unit to output audio of the airwave broadcast and a moving image and a stationary image of the IP broadcast.

**24.** [CANCELED]

**25.** A broadcasting receiver control program, causing a computer to execute the method of controlling a broadcasting receiver according to Claim 22 or 23.

**26.** [CANCELED]

**27.** [ADDED] The broadcasting receiver according to any one of Claims 16 to 19, wherein presence or absence of a failure of the reception status of the IP broadcast is judged according to whether a data transfer rate of the IP broadcast is less than a prescribed value or not.
